(19) Europäisches Patentamt
European Patent Office
Office européen des brevets

(11) EP 3 518 259 B1

(12) **EUROPEAN PATENT SPECIFICATION**

(45) Date of publication and mention of the grant of the patent:
**11.01.2023 Bulletin 2023/02**

(21) Application number: **17853196.8**

(22) Date of filing: **25.09.2017**

(51) International Patent Classification (IPC):
***H01F 1/057*** (2006.01) ***H01F 1/00*** (2006.01)
***H01F 41/02*** (2006.01) ***B22F 1/10*** (2022.01)
***B22F 3/14*** (2006.01) ***B22F 3/16*** (2006.01)
***B22F 3/00*** (2021.01) ***B22F 3/10*** (2006.01)
***B22F 3/24*** (2006.01) ***C21D 6/00*** (2006.01)
***H02K 15/03*** (2006.01) ***C22C 38/00*** (2006.01)
***C22C 38/16*** (2006.01) *B22F 3/15* (2006.01)
*C22C 38/10* (2006.01) *C22C 38/12* (2006.01)

(52) Cooperative Patent Classification (CPC):
**B22F 3/24; B22F 1/00; B22F 1/10; B22F 3/14; B22F 3/16; C21D 6/00; C22C 38/005; C22C 38/16; H01F 1/0054; H01F 1/0577; H01F 41/0273; H02K 15/03;** B22F 3/15; B22F 2003/248; B22F 2304/10; (Cont.)

(86) International application number:
**PCT/JP2017/034433**

(87) International publication number:
**WO 2018/056429 (29.03.2018 Gazette 2018/13)**

(54) **METHOD FOR MANUFACTURING A RARE EARTH SINTERED MAGNET**

VERFAHREN ZUR HERSTELLUNG EINES GESINTERTEN SELTENERDMAGNETEN

PROCÉDÉ DE FABRICATION POUR FORMER UN AIMANT FRITTÉ À BASE DE TERRES RARES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2016 JP 2016185997**

(43) Date of publication of application:
**31.07.2019 Bulletin 2019/31**

(73) Proprietor: **Nitto Denko Corporation**
**Ibaraki-shi, Osaka 567-8680 (JP)**

(72) Inventors:
- **FUJIKAWA, Kenichi**
**Ibaraki-shi**
**Osaka 567-8680 (JP)**
- **OZEKI, Izumi**
**Ibaraki-shi**
**Osaka 567-8680 (JP)**
- **YAMAMOTO, Takashi**
**Ibaraki-shi**
**Osaka 567-8680 (JP)**
- **EBE, Hirofumi**
**Ibaraki-shi**
**Osaka 567-8680 (JP)**
- **NOBUTA, Takuya**
**Ibaraki-shi**
**Osaka 567-8680 (JP)**

(74) Representative: **Gill Jennings & Every LLP**
**The Broadgate Tower**
**20 Primrose Street**
**London EC2A 2ES (GB)**

(56) References cited:
**EP-A1- 3 276 645**
**WO-A1-2014/123079**
**JP-A- H08 167 516**
**JP-A- 2011 210 879**
**JP-A- 2014 057 075**
**JP-A- 2014 225 537**
**JP-A- 2015 079 925**
**JP-A- 2016 042 531**
**US-A1- 2014 145 808**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)
C22C 38/002; C22C 38/10; C22C 38/12;
C22C 2202/02

## Description

### TECHNICAL FIELD

The present invention relates to a method of producing a rare-earth sintered magnet-forming sintered body, particularly, a method of producing, through pressure sintering, a rare-earth sintered magnet-forming sintered body comprising sintered magnet material particles each having an easy magnetization axis, and to a rare-earth sintered magnet-forming sintered body formed by the method. The present invention also relates to a rare-earth sintered magnet obtained by magnetizing the rare-earth sintered magnet-forming sintered body.

### BACKGROUND ART

Great interest is shown in a rare-earth permanent magnet as a magnet to be used in a rotary machine such as a motor for various electric or electronic devices. Such a rare-earth permanent magnet is typically produced through a sintering step of sintering a solid magnet material powder formed into a desired shape, in a sintering die at a high temperature. By going through the sintering step, it is possible to improve magnetic properties such as coercivity and residual magnetic flux density, and heat resistance, as compared to, e.g., a bond magnet which is produced by mixing resin with a magnet material powder. On the other hand, shrinkage (anisotropic shrinkage) arising during the sintering causes a change in shape and size between a shaped piece before the sintering (rare-earth magnet-forming material) and a sintered body after the sintering, so that there is a problem that it is difficult to control the shape or the like of a rare-earth sintered magnet as a final product.

As one measure to solve this problem, there has been proposed pressure sintering in which sintering is performed while a pressure is applied to a shaped piece to be sintered. By performing the pressure sintering, it is possible to suppress variation in shrinkage due to sintering to obtain a magnet having a desired shape, i.e., to realize net shape sintering. However, the pressure sintering gives rise to a new problem that the pressure application during the pressure sintering causes variation in microstructure of a resulting magnet, leading to deterioration in magnetic properties, as compared to case of performing so-called vacuum sintering.

Among inventions relating to rare-earth magnets, a conventional technique dealing with heat treatment in a sintering step as a technical problem includes the following.

JP 2016-42763A (Patent Document 1) which was filed by the applicant of this application discloses a production method, wherein a shaped body formed from a green sheet obtained by subjecting a mixture of a magnet material powder and a binder to magnetic field orientation, more specifically, a shaped body comprising magnet material particles each having easy magnetization axis oriented in a given direction, is sintered by non-pressure sintering in vacuum, uniaxial pressure sintering in which sintering is performed while a pressure is uniaxially applied to the shaped body, biaxial pressure sintering in which sintering is performed while a pressure is biaxially applied to the shaped body, isotropic pressure sintering in which sintering is performed while a pressure is isotopically applied to the shaped body, or the like, wherein, for example, in a case where, among various pressure sintering processes such as hot press sintering, hot isostatic pressing (HIP) sintering, ultrahigh-pressure synthesis and sintering, and gas pressure sintering, discharge plasma sintering (SPS), the SPS is employed, the temperature of the shaped body is raised up to 940°C in a vacuum atmosphere at a pressure of several Pa or less, and then the shaped body is cooled and subjected to heat treatment at a temperature of 300°C to 1000°C for 2 hours, again. However, the method disclosed in Patent Document 1 is intended for not only pressure sintering but also vacuum sintering, and is not designed to solve a problem associated with pressure sintering as in the present invention, in the first place.

JP 2011-210879A (Patent Document 2) discloses a rare-earth magnet production method which comprises: subjecting a pressed powder body (compact) obtained by shaping an HDDR (Hydrogenation Decomposition Desorption Recombination) powder, to pressure sintering, using a hot press at a temperature of 500°C to 900°C under a pressure of 20 to 3000 MPa, and then subjecting the resulting body to heat treatment at a temperature of 500°C to 900°C. Here, the Patent Document 2 mentions that a temperature during the heat treatment to be performed after the pressure sintering is set to 900°C or less, because, if the temperature is greater than 900°C, a grain growth in a main phase becomes prominent, causing deterioration in coercivity. The Patent Document 2 also mentions that, in a process of producing an anisotropic bulk magnet, it is preferable that a pressing direction during hot pressing is set to become coincident with an orientation direction of easy magnetization axes of the HDDR powder in the pressed powder body (a direction of a magnetic field applied during formation of the pressed powder body). However, as a result of diligent researches, the inventors of this application found that the temperature in the heat treatment to be performed after the pressure sintering needs to be set to greater than 900°C so as to maintain magnetic properties, and the heat treatment temperature needs to be set in a relationship with the maximum achieving temperature during sintering treatment. Moreover, although, in the method disclosed in the Patent Document 2, the pressing direction is set to become coincident with the orientation direction of easy magnetization axes of the HDDR powder, this setting is likely to cause variation in microstructure of

the sintered HDDR powder, leading to deterioration in magnetic properties.

JP H10-163055A (Patent Document 3) discloses a permanent magnet production method, wherein a shaped body obtained by mixing an insulator such as fluoride which is a non-magnetic material, with a magnet material powder whose surfaces are coated with a binder is subjected to pressure sintering at a temperature of 725°C to obtain a sintered body, and the sintered body is subjected to two-stage heat treatment consisting a first-stage heat treatment at 900°C for 2 hours and a second-stage heat treatment at 500°C for 30 minutes. However, as a result of diligent researches, the inventors of this application found that the temperature in the heat treatment to be performed after the pressure sintering needs to be set to greater than 900°C so as to maintain magnetic properties, and the heat treatment temperature needs to be set in a relationship with the maximum achieving temperature during sintering treatment. Moreover, in the method disclosed in the Patent Document 3, an insulator such as fluoride which is a non-magnetic material is mixed with the shaped body. Thus, this method is incapable of enhancing magnetic properties.

JP 2010-263172A (Patent Document 4) discloses a rare-earth magnet formed through hot shaping. Here, the Patent Document 4 particularly mentions that, after applying a pressure to a shaped body at a temperature of 500 to 900°C, the resulting shaped body is subjected to heat treatment at 1000°C for 1 hour. However, a rare-earth magnet formed through hot shaping is a magnet of a different type from a so-called sintered magnet, as also described in the Patent Document 4, i.e., has no relationship to this application. Therefore, techniques disclosed in the Patent Document 4 do not contribute to solving the problem associated with pressure sintering as in the present invention. Moreover, the Patent Document 4 mentions that the pressure to be used in a production method disclosed in the Patent Document 4 is, e.g., from about 2 to 4 ton /$cm^2$, which is quite different from a pressure to be used in pressure sintering, ranging, e.g., from 0.01 MPa to 100 MPa (Patent Document 1). Thus, the method disclosed in the Patent Document 4 has difficulty in producing a magnet exhibiting magnetic properties and heat resistance equal to those of the magnet of this application.

US 2014/145808 A1 describes a method based on a green body bound by a thermoplastic resin, but differs in the heating profile from the claimed invention.

CITATION LIST

[Patent Document]

Patent Document 1: JP 2016-42763A
Patent Document 2: JP 2011-210879A
Patent Document 3: JP H10-163055A
Patent Document 4: JP 2010-263172A

SUMMARY OF INVENTION

[Technical Problem]

The present invention has been made in view of solving the above conventional problems, and an object thereof is to provide a method of producing a rare-earth sintered magnet-forming sintered body for providing a rare-earth sintered magnet having a desired shape and exhibiting magnetic properties equal to or superior to those in case of performing vacuum sintering, by employing pressure sintering so as to suppress variation in shrinkage arising during sintering, while suppressing variation in microstructure of a magnet due to application of pressure, which is a disadvantage of the pressure sintering.

[Solution to Technical Problem]

In order to solve the aforementioned problems, according a first aspect of the present invention, there is provided a method of producing a rare-earth sintered magnet-forming sintered body according to claim 1.

In the rare-earth sintered magnet-forming sintered body production method according to the first aspect of the present invention, the pressure sintering is employed, so that it is possible to suppress variation in shrinkage arising during the sintering, thereby providing a sintered body having a desired shape. Further, the high-temperature heat treatment is performed after the sintering treatment, so that it is possible to correct variation in microstructure of the sintered magnet material particles due to the application of pressure, thereby providing a sintered body realizing magnetic properties equal to or superior to those in case of performing vacuum sintering.

In the rare-earth sintered magnet-forming sintered body production method according to the first aspect of the present invention, the rare-earth magnet-forming material is obtained by, before heating and sintering a composite

material obtained by mixing the magnet material particles with a thermoplastic resin, releasing, by heat, the thermoplastic resin from the composite material.

According to this feature, the thermoplastic resin is released before the heating and the sintering, so that it is possible to reduce the amount of carbon remaining in the composite material to suppress deterioration in residual magnetic flux density and coercivity of a rare-earth sintered magnet as a final product.

In the first aspect of the present invention, the rare-earth magnet-forming material may be prepared in the form of an aggregate of magnet material particles each containing a rare-earth substance and having an easy magnetization axis. In this case, the aggregate of magnet material particles is put into a sintering die and subjected to pressure sintering.

The rare-earth sintered magnet-forming sintered body production method according to the first aspect of the present invention further comprises, after the high-temperature heat treatment, subjecting the sintered body to low-temperature heat treatment under a temperature of 350°C, to 650°C.

According to this feature, the low-temperature heat treatment is performed in addition to the high-temperature heat treatment, so that it is possible to form a grain boundary phase between grains as the sintered magnet material particles to thereby promote magnetic separation between the grains to improve the coercivity of a rare-earth sintered magnet as a final product.

Preferably, in the rare-earth sintered magnet-forming sintered body production method according to the first aspect of the present invention, the high-temperature heat treatment is held at a temperature around the maximum achieving temperature set for the high-temperature heat treatment, for about 1 to 50 hours.

Preferably, in the rare-earth sintered magnet-forming sintered body production method according to the first aspect of the present invention, raising of the pressure may be initiated when a temperature during the sintering reaches at least 300°C. According to this feature, when the raising of the pressure is initiated when the temperature reaches at least 300°C, melt-bonding between the magnet material particles comprised in the rare-earth magnet-forming material is started and thus the strength of the rare-earth magnet-forming material is increased, so that it becomes possible to perform sintering while applying a pressure, without the occurrence of crack.

In the rare-earth sintered magnet-forming sintered body production method according to the first aspect of the present invention, the temperature rise rate before reaching the maximum achieving temperature is 20°/min or more.

Preferably, in the rare-earth sintered magnet-forming sintered body production method according to the first aspect of the present invention, the pressing force is increased to 3 MPa or more.

According to this feature, the pressing force is set to 3 MPa or more, so that it is possible to enable the rare-earth sintered magnet-forming sintered body to shrink only in a pressing direction (direction of the pressure application) to thereby facilitate controlling the shape or the like of a rare-earth sintered magnet as a final product

Preferably, in the rare-earth sintered magnet-forming sintered body production method according to the first aspect of the present invention, the maximum achieving temperature is greater than 900°C.

According to this feature, the maximum achieving temperature is set to greater than 900°C, so that it is possible to prevent the occurrence of a void in the rare-earth magnet-forming material to thereby facilitate producing a rare-earth sintered magnet-forming sintered body having a desired shape.

Preferably, in the rare-earth sintered magnet-forming sintered body production method according to the first aspect of the present invention, the high-temperature heat treatment is performed to satisfy the following relationship: $-1.13x + 1173 \geq y \geq -1.2x + 1166$ (where $1100°C \geq x \geq 900°C$), where x (°C) denotes the maximum achieving temperature of the high-temperature heat treatment, and y (hour) denotes a holding time at a temperature around the maximum achieving temperature.

According to this feature, the high-temperature heat treatment is performed under the above condition, so that it is possible to improve magnetic properties of the rare-earth sintered magnet-forming sintered body.

Preferably, in the rare-earth sintered magnet-forming sintered body production method according to the first aspect of the present invention, the upper limit of the maximum achieving temperature of the high-temperature heat treatment is set, based on an average particle size of the magnet material particles, to greater than 900°C when the average particle size is 1 $\mu$m, and to 1100°C or less when the average particle size is 5 $\mu$m.

The upper limit of the maximum achieving temperature set for the high-temperature heat treatment receives an influence of the average particle size of the magnet material particles. Thus, it is desirable to set the upper limit depending on the average particle size.

Also disclosed herein is a rare-earth sintered magnet-forming sintered body which is composed of a sintered body of magnet material particles each containing a rare-earth substance and having an easy magnetization axis, and in which a rare-earth rich phase containing a rare-earth substance in a higher concentration than that in the remaining region is formed in a grain boundary between the sintered magnet material particles, wherein the rare-earth rich phase comprises a Cu-containing rare-earth rich phase, and wherein, in cross-section of the rare-earth sintered magnet-forming sintered body, an area rate of the Cu-containing rare-earth rich phase with respect to the entire rare-earth rich phase is 40% or more, and an aspect ratio of a pole figure representing a variation in orientation, determined by electron backscatter diffraction (EBSD) analysis, is 1.2 or more.

Also disclosed herein is a rare-earth sintered magnet-forming sintered body which is composed of a sintered body of magnet material particles each containing a rare-earth substance and having an easy magnetization axis, and in which a rare-earth rich phase containing a rare-earth substance in a higher concentration than that in the remaining region is formed in a grain boundary between the sintered magnet material particles, wherein the rare-earth rich phase comprises a Ga-containing rare-earth rich phase, and wherein, in cross-section of the rare-earth sintered magnet-forming sintered body, an area rate of the Ga-containing rare-earth rich phase with respect to the entire rare-earth rich phase is 15% or more when an average particle size of the magnet material particles is less than 2 μm, and is 19% or more when the average particle size of the magnet material particles is 2 μm or more, and an aspect ratio of a pole figure representing a variation in orientation, determined by electron backscatter diffraction (EBSD) analysis, is 1.2 or more.

Also disclosed herein is a rare-earth sintered magnet-forming sintered body which is composed of a sintered body of magnet material particles each containing a rare-earth substance and having an easy magnetization axis, and in which a rare-earth rich phase containing a rare-earth substance in a higher concentration than that in the remaining region is formed in a grain boundary between the sintered magnet material particles, wherein the rare-earth rich phase comprises a Cu and Ga-containing rare-earth rich phase, and wherein, in cross-section of the rare-earth sintered magnet-forming sintered body, an area rate of the Cu and Ga-containing rare-earth rich phase with respect to the entire rare-earth rich phase is 10% or more when an average particle size of the magnet material particles is less than 2 μm, and is 17% or more when the average particle size of the magnet material particles is 2 μm or more, and an aspect ratio of a pole figure representing a variation of orientation, determined by electron backscatter diffraction (EBSD) analysis, is 1.2 or more.

It is inferred that Cu or Ga contributes to improvement in the magnetic properties. Thus, the area rate of the Cu and/or Ga-containing rare-earth rich phase is preferably increased as large as possible

Further, particularly in a rare-earth sintered magnet comprising sintered magnet material particles each having an easy magnetization axis, a fact that the aspect ratio of the pole figure representing a variation in orientation has a relatively large value means that the pressure application is adequately performed. The reason is that this variation is caused by the pressure application during the pressure sintering. Therefore, the aspect ratio is preferably 1.2 or more.

Also disclosed herein is a rare-earth sintered magnet-forming sintered body which is composed of a sintered body of magnet material particles each containing a rare-earth substance and having an easy magnetization axis, and in which a rare-earth rich phase containing a rare-earth substance in a higher concentration than that in the remaining region is formed in a grain boundary between the sintered magnet material particles, wherein, assuming that a grain size of the sintered magnet material particles calculated by electron backscatter diffraction (EBSD) analysis is defined as $\alpha$ μm, the rare-earth rich phase comprises an $\alpha$ $\mu m^2$ or more-wide rare-earth rich phase, and wherein, in cross-section of the rare-earth sintered magnet-forming sintered body, an area rate of the $\alpha$ $\mu m^2$ or more-wide rare-earth rich phase with respect to the entire rare-earth rich phase is 35% or more on average, and an aspect ratio of a pole figure representing a variation in orientation, determined by electron backscatter diffraction (EBSD) analysis, is 1.2 or more.

In the following, units are expressed in cgs units, wherein 1kG = 0.1T and IkOe = 79.6 kA/m.

In the rare-earth sintered magnet-forming sintered body which is composed of a sintered body of magnet material particles each containing a rare-earth substance and having an easy magnetization axis, and in which a rare-earth rich phase containing a rare-earth substance in a higher concentration than that in the remaining region is formed in a grain boundary between the sintered magnet material particles, wherein, assuming that a grain size of the sintered magnet material particles calculated by electron backscatter diffraction (EBSD) analysis is defined as $\alpha$ μm, the rare-earth rich phase comprises an $\alpha$ $\mu m^2$ or more-wide rare-earth rich phase, and wherein, in cross-section of the rare-earth sintered magnet-forming sintered body, an area rate of the $\alpha$ $\mu m^2$ or more-wide rare-earth rich phase with respect to the entire rare-earth rich phase is 35% or more on average, and an aspect ratio of a pole figure representing a variation in orientation, determined by electron backscatter diffraction (EBSD) analysis, is 1.2 or more, it is possible to have a coercivity of 14 kOe or more.

Further, in the rare-earth sintered magnet-forming sintered body disclosed herein, when the magnet material particles contain Dy or Tb in an amount of 1 weight% or less, it is possible to exhibit a residual magnetic flux density Br (kG) and a coercivity Hcj (kOe) whose sum is 27.5 or more. In the rare-earth sintered magnet-forming sintered body disclosed herein, when the magnet material particles contain Dy or Tb in an amount of 1 weight% or more, it is also possible to exhibit a residual magnetic flux density Br (kG) and a coercivity Hcj (kOe) whose sum is 30.0 or more.

Further, in the rare-earth sintered magnet-forming sintered body disclosed herein, it is possible to have a squareness ratio of 90% or more, where the squareness ratio is defined by the following formula: Hk/Hcj (%).

By performing the high-temperature heat treatment after the sintering treatment, it is possible to correct variation in microstructure of the sintered magnet material particles, so that such high magnetic properties can be obtained.

The sintered body formed using the rare-earth sintered magnet-forming sintered body production method according to the first aspect of the present invention can be magnetized to produce a rare-earth sintered magnet.

Further, the rare-earth sintered magnet-forming sintered body disclosed herein can be magnetized to produce a rare-earth sintered magnet.

[Effect of Invention]

The present invention makes it possible to provide a sintered body capable of forming a rare-earth sintered magnet having a desired shape and exhibiting magnetic properties equal to or superior to those in case of performing vacuum sintering, by employing pressure sintering so as to suppress variation in shrinkage arising during sintering, while suppressing variation in microstructure of a magnet due to application of pressure, which is a disadvantage of the pressure sintering. As above, the present invention makes it possible to suppress variation in microstructure of a magnet due to application of pressure, which is a disadvantage of the pressure sintering. Thus, the production method according the present invention is particularly suitable as a production method for a rare-earth sintered magnet comprising sintered magnet material particles each having an easy magnetization axis.

BRIEF DESCRIPTION OF DRAWINGS

FIG. 1 includes a perspective view depicting one example of a rare-earth magnet-forming material for a rare-earth sintered magnet to be produced using a method according to one embodiment of the present invention, and a perspective view depicting one example of a rare-earth sintered magnet produced from a rare-earth magnet-forming material.
FIG. 2 is a schematic diagram illustrating an orientation angle and an orientation axis angle, wherein FIG.2 (a) is a cross-sectional view depicting one example of the orientation of easy magnetization axes of sintered magnet material particles in a rare-earth magnet, and FIG. 2(b) is a schematic enlarged view illustrating a process of determining "orientation angles" and an "orientation axis angle" regarding easy magnetization axes of the sintered magnet material particles.
FIG. 3 is a graph illustrating a process of determining an orientation angle deviation.
FIG. 4 depicts a distribution of orientation angles based on an EBSD analysis, wherein: FIG. 4(a) is a perspective view depicting directions of coordinate axes taken in a rare-earth magnet; FIG. 4(b) depicts examples of pole figures obtained in a central region and opposite end regions of the magnet by the EBSD analysis; and FIG. 4(c) depicts orientation axis angles in a cross-section of the magnet taken along an A2 axis in FIG. 4(a):

FIG. 5 is a diagram depicting part of a process of producing a rare-earth magnet-forming material.
FIG. 6 is a graph presenting a desired temperature rise rate in calcination treatment.
FIG. 7 is a schematic chart of a heat treatment to be performed in a sintering step.
FIG. 8 is a diagram depicting one example of a rare-earth magnet-forming material serving as a basis for a sintered body.
FIG. 9 is a diagram depicting another example of a rare-earth magnet-forming material serving as a basis for the sintered body.
FIG. 10 is a graph presenting a relationship between a maximum achieving temperature of a high-temperature heat treatment and a holding time at the temperature.
FIG. 11 is a diagram depicting a pole figure of a rare-earth sintered magnet.
FIG. 12 is a diagram depicting one example of an image obtained by subjecting an SEM image of a rare-earth rich phase appearing in a cut surface of a sintered body, to banalization processing.
FIG. 13 is a diagram depicting an elemental mapping image.

DESCRIPTION OF EMBODIMENTS

With reference to the accompanying drawings, the present invention will be described based on a preferred embodiment thereof. Although only a preferred embodiment of the present invention will be described below for the same of simplicity, it is to be understood that such an embodiment is not intended to limit the present invention.
FIG. 1(a) is a perspective view depicting a rare-earth magnet-forming material 3 for obtaining a sintered body for forming a rare-earth sintered magnet 1, i.e., a rare-earth sintered magnet-forming sintered body, to be produced using a method according to one embodiment of the present invention, and a perspective view depicting the rare-earth sintered magnet 1 produced from the rare-earth magnet-forming material 3. Although a trapezoidally-shaped rare-earth magnet-forming material is shown as one example, it is not intended to limit the shape of the rare-earth magnet-forming material 3 to such a shape. In FIG. 1, the directions "$\alpha$", "$\beta$" and "$\gamma$" are in orthogonal relation to each other.

[1. General Description of Rare-Earth Sintered magnet]

The rare-earth sintered magnet 1 depicted in FIG. 1(b) is produced by subjecting the rare-earth magnet-forming material 3 depicted in FIG. 1(a) to pressure sintering. The rare-earth magnet-forming material 3 comprises a magnet material containing a rare-earth substance. As the magnet material, it is possible to use, e.g., an Nd-Fe-B based magnet material. In this case, for example, the Nd-Fe-B based magnet material may contain, in terms of weight percent: R (R denotes one or more rare-earth elements including Y) in an amount of 27.0 to 40.0 wt%, preferably, 27.0 to 35 wt%; B in an amount of 0.6 to 2 wt%, preferably, 0.6 to 1.1 wt%; and Fe in an amount of 60 to 75 wt%. Typically, the Nd-Fe-B based magnet material contains: Nd in an amount of 27 to 40 wt%; B in an amount of 0.8 to 2 wt% of B; and Fe which is an electrolytic iron, in an amount of 60 to 70 wt%. With a view to improving magnetic properties, this magnet material may contain other element such as Dy, Tb, Co, Cu, Al, Si, Ga, Nb, V, Pr, Mo, Zr, Ta, Ti, W, Ag, Bi, Zn, or Mg, in a small amount.

The magnet material is comprised in the rare-earth magnet-forming material 3, in the form of fine magnet material particles 3a. Each of the magnet material particles has an easy magnetization axis "g" oriented in a given direction "G" depicted in FIG. 1(a). For example, the easy magnetization axis "g" may be an axis extending along a direction orthogonal to both an upper surface 21 and a bottom surface 22 of the sintered magnet 1 (in a direction indicated by the arrowed line "α" (direction "α") in FIG. 1), i.e., along a thickness direction of the sintered magnet 1, or may be an axis extending from the bottom surface 22 toward the upper surface 21. Further, each of the easy magnetization axes "g" is oriented in one plane defined by the direction "α" and a direction indicated by the arrowed line "γ" (direction "γ") in FIG. 1, e.g., in a plane of a front end surface 23 or a rear end surface 24. More specifically, each of the easy magnetization axes "g" is oriented in any one of cross-sections taken along the "α-γ" plane orthogonal to a direction indicated by the arrowed line "β" (direction"β") in FIG. 1. In the easy magnetization axes "g", all of them may be oriented in the same direction (parallel orientation), or part of them may be oriented in a different direction (non-parallel orientation). The term "non-parallel orientation" here includes, for example, a state in which the aftermentioned "orientation axis angle" of the easy magnetization axes "g" varies by 20° or more.

Respective meanings of terms relating to orientation will be described below.

[Orientation Angle]

The term "orientation angle" means an angle of the direction of the easy magnetization axis of the magnet material particle with respect to a predetermined reference line.

[Orientation axis angle]

The term "orientation axis angle" means a most frequently appearing orientation angle among orientation angles of the magnet material particles contained in a predetermined discrete area in a specific plane of a magnet. The area for determining the orientation axis angle is set as a rectangular area including at least 30, e.g., 200 to 300 magnet material particles, or a square area having a side length of 35 μm.

FIG. 2 illustrates the orientation angle and the orientation axis angle. FIG. 2(a) is a cross-sectional view depicting one example of the orientation of the easy magnetization axes of sintered magnet material particles in a rare-earth magnet, wherein the rare-earth magnet M has: a first surface S-1; a second surface S-2 apart from the first surface by a distance corresponding to a thickness t and having a width W; and end surfaces E-1 and E-2 formed at width (W)-directional opposite ends. In the depicted example, the first surface S-1 and the second surface S-2 are flat surfaces parallel to each other. In the depicted cross-section, the first surface S-1 and the second surface S-2 are denoted by two mutually parallel straight lines. The end surface E-1 is formed as an inclined surface extending obliquely upwardly and rightwardly toward the first surface S-1, and the end surface E-2 is formed as an inclined surface extending obliquely upwardly and leftwardly toward the second surface S-2. An arrowed line B-1 schematically denotes the direction of an orientation axis representative of the easy magnetization axes of the sintered magnet material particles in a width-directional central region of the rare-earth magnet M. On the other hand, an arrowed line B-2 schematically denotes the direction of an orientation axis representative of the easy magnetization axes of the sintered magnet material particles in a region adjacent to the end surface E-1. Similarly, an arrowed line B-3 schematically denotes the direction an orientation axis representative of the easy magnetization axes of the sintered magnet material particles in a region adjacent to the end surface E-2.

The "orientation axis angle" is an angle between the orientation axis denoted by each of the arrowed lines B-1, B-2, B-3, and a single reference line. The reference line may be arbitrarily set. However, in the case where the cross-section of the first surface S-1 is denoted by a straight line as in the example depicted in FIG. 2(a), the cross-section line of the first surface S-1 is conveniently used as the reference line. FIG. 2(b) is a schematic enlarged view illustrating a process of determining the "orientation angles" and the "orientation axis angle" of the easy magnetization axes of the

sintered magnet material particles. An arbitrary area, e.g., a rectangular area R depicted in FIG. 2(a), is enlargedly depicted in FIG. 2 (b). This rectangular area R includes a large number of, e.g., 30 or more, or 200 to 300, sintered magnet material particles P. As the number of the sintered magnet material particles included in the rectangular area becomes larger, measurement accuracy becomes better. However, even in a case where the number is only about 30, measurement can be performed with a sufficient accuracy. Each of the sintered magnet material particles P has the easy magnetization axis P-1. The easy magnetization axis P-1 does not normally have any polarity. However, when the sintered magnet material particles are magnetized, the easy magnetization axis has a polarity and becomes a vector. In FIG. 2(b), the easy magnetization axis is denoted by an arrowed line having directionality, considering a polarity to be provided thereto by magnetization. In the following description, the term "orientation direction of the easy magnetization axis" or a term similar thereto is used to denote the orientation of a polarity to be provided to the easy magnetization axis by magnetization.

As depicted in FIG. 2(b), the easy magnetization axis P-1 in each of the sintered magnet material particles P has an "orientation angle" which is an angle between a direction in which the easy magnetization axis P-1 is oriented, and the reference line. Then, among "orientation angles" of the easy magnetization axes P-1 of the sintered magnet material particles P in the rectangular area R depicted in FIG. 14(b), a most frequent angle is defined as an "orientation axis angle" B.

[Orientation Angle Deviation]

In an arbitrary rectangular area, a difference between the orientation axis angle and each of the orientation angles of the easy magnetization axes of all the sintered magnet material particles contained in the rectangular area is determined. Then, an angle value represented by a half width in a distribution of a deviation of the orientation angle with respect to the orientation axis angle is defined as an orientation angle deviation. FIG. 3 is a graph illustrating a process of determining the orientation angle deviation. In FIG. 3, a distribution of a deviation $\triangle\theta$ of the orientation angle of the easy magnetization axis in each of the sintered magnet material particles with respect to the easy magnetization axis is represented by a curve C. On the assumption that a position where a cumulative frequency represented in the vertical axis is maximized is defined as 100%, a value of the orientation angle deviation $\triangle\theta$ corresponding to a cumulative frequency of 50% is the half width.

[Measurement of Orientation Angle]

The orientation angle of the easy magnetization axis in each of the sintered magnet material particles P can be determined by an "Electron Back scatter Diffraction Analysis" (EBSD Analysis) based on a scanning electron microscopical (SEM) image. Examples of devices which can be used for the analysis are: JSM-7001F manufactured by Nihon Electron KK (JEOL Ltd.) having a head office in Akishima City, Tokyo, Japan, which is a scanning electron microscope equipped with an EBSD Detector (AZtecHKL EBSD NordlysNano Integrated) manufactured by Oxford Instruments, and SUPRA40VP manufactured by ZEISS, which is a scanning electron microscope equipped with an EBSD detector (Hikari High Speed EBSD Detector) manufactured by EDAX Inc. Further, examples of an entity who undertakes EBSD analysis as an outsourcing business include JFE Techno-Research Co., having a head office in Nihonbashi, Chuo-ku, Tokyo, Japan, and Nitto Analytical Techno-Center in Ibaraki City, Osaka, Japan. Through the EBSD analysis, it is possible to determine the orientation angles and the orientation axis angle regarding the easy magnetization axes of the sintered magnet material particles contained in a given area. FIG.4 depicts one example of indication of orientation of the easy magnetization axis by the EBSD analysis, wherein FIG. 4(a) is a perspective view depicting directions of coordinate axes taken in a rare-earth magnet, and FIG. 4(b) depicts examples of pole figures obtained at a central region and opposite end regions of the magnet by the EBSD analysis. Further, FIG. 4(c) depicts the orientation axis angles in a cross-section of the magnet taken along the A2 axis. The orientation axis angle can be indicated by dividing the orientation vector of the easy magnetization axis of the sintered magnet material particle into a first component in a plane including A1 and A2 axes, and a second component in a plane including A1 and A3 axes. The A2 axis is a width-directional axis, and the A1 axis is a thickness-directional axis. The figure at the center of FIG. 4(b) shows that, in the width-directional central region of the magnet, the orientation of the easy magnetization axis is approximately coincident with a direction along the A1 axis. On the other hand, the figure on the left side of FIG. 4(b) shows that, in the width-directional left end region of the magnet, the orientation of the easy magnetization axis extends obliquely upwardly and rightwardly from below the magnet, along a plane defined by the A1 and A2 axes. Similarly, the figure on the right side of FIG. 4(b) shows that, in the width-directional right end region of the magnet, the orientation of the easy magnetization axis extends obliquely upwardly and leftwardly from below the magnet, along the plane defined by the A1 and A2 axes. These orientations are depicted as orientation vectors in FIG. 4(c). Here, the pole figures depicted in FIG. 4(b) was obtained by SUPRA40VP manufactured by ZEISS, which is a scanning electron microscope equipped with an EBSD detector (Hikari High Speed EBSD Detector) manufactured by EDAX Inc.

[Crystal Orientation Diagram]

In regard to each of the sintered magnet material particles contained in an arbitrary area, a crystal orientation diagram presents an inclination angle of the easy magnetization axis of the sintered magnet material particle with respect to an axis perpendicular to an observation plane. This diagram can be produced based on a scanning electron microscopical (SEM) image.

[2. Production Method for Rare-Earth Sintered magnet]

A production method for producing the rare-earth sintered magnet 1 depicted in FIG. 1(b), according to one embodiment of the present invention, will be described.

(1) Production of Rare-Earth Magnet-forming material

The rare-earth magnet-forming material 3 serving as a basis for the rare-earth sintered magnet 1 is prepared. FIG. 5 depicts part of a process of producing the rare-earth magnet-forming material 3. First of all, an ingot of a magnet material comprised of an Nd-Fe-B based alloy having a given mixing ratio is produced by a casting process. Typically, the Nd-Fe-B based alloy usable for a neodymium magnet has a composition comprising 30 wt% of Nd, 67 wt% of Fe which is preferably electrolytic iron, and 1.0 wt% of B. Subsequently, this ingot is coarsely pulverized to have a particle size of about 200 $\mu$m, using heretofore-known means such as a stamp mill or a crusher. Alternatively, the ingot may be melted and subjected to a strip casting process to produce flakes, and then the flakes may be coarsely powdered by a hydrogen cracking process. In this way, coarsely-pulverized magnet material particles 115 are obtained (see FIG. 5(a)). When performing the coarse powdering by a hydrogen cracking process, the coarse powdering is preferably achieved by adsorbing hydrogen onto a target alloy at a temperature of 550°C or less. If the hydrogen absorption is performed at a temperature of greater than 550°C, an HDDR reaction is promoted to cause a decrease in particle size. This is likely to fail to bring out an advantageous effect of the aftermentioned high-temperature heat treatment "B".

Subsequently, the coarsely-pulverized magnet material particles 115 are finely pulverized by a pulverization method such as a wet process using a bead mill 116, or a dry process using a jet mill. For example, in the fine pulverization based on the wet process using the bead mill 116 , the coarsely-pulverized magnet material particles 115 are finely pulverized, in the solvent, to an average particle size falling within a given range, e.g., 0.1 $\mu$m to 5.0 $\mu$m to thereby disperse the resulting magnet material particles in the solvent (see FIG. 5(b)). Subsequently, the magnet material particles contained in the solvent after the wet pulverization are dried by drying mean such as reduced-pressure drying, and the dried magnet material particles are taken out (not depicted). Here, a type of solvent usable in the pulverization is not particularly limited. For example, it is possible to use organic solvent such as: alcohols such as isopropyl alcohol, ethanol and methanol; esters such as ethyl acetate; lower hydrocarbons such as pentane and hexane; aromatics such as benzene, toluene and xylene; and ketones; and mixtures thereof. It is also possible to use an inorganic solvent such as liquefied nitrogen, liquefied helium, or liquefied argon. In any case, it is preferable to use a solvent containing no oxygen atom therein. The average particle size is preferably from 1.0 to 5.0 $\mu$m, more preferably from 2.0 to 5.0 $\mu$m. By setting the average particle size to fall within the above range, it is possible to suppress abnormal grain growth of the magnet material particles comprised in the rare-earth sintered magnet-forming sintered body, and thus maximally take advantage of an improvement in magnetic properties by the aforementioned high-temperature heat treatment "B".

On the other hand, in the fine pulverization based on the dry process using the jet mill, the coarsely-pulverized magnet material particles 115 are finely pulverized by the jet mill, in (a) an atmosphere consisting inert gas such as nitrogen gas, Ar gas or He gas, wherein an oxygen content of the inert gas is 0.5% or less, preferably substantially 0%, or (b) an atmosphere consisting inert gas such as nitrogen gas, Ar gas or He gas, wherein an oxygen content of the inert gas is in the range of 0.001 to 0.5%, and pulverized into fine particles having an average particle size of 6.0$\mu$m or less, or an average particle size falling within a given range, e.g., of 0.7 $\mu$m to 5.0 $\mu$m. The average particle size is preferably from 1.0 to 5.0 $\mu$m, more preferably from 2.0 to 5.0 $\mu$m. By setting the average particle size to fall within the above range, it is possible to suppress abnormal grain growth of the sintered magnet material particles comprised in the rare-earth sintered magnet-forming sintered body, and thus maximally take advantage of an improvement in magnetic properties by the aftermentioned high-temperature heat treatment "B". Here, the term "the concentration of oxygen is substantially 0%" does not limitedly mean that the concentration of oxygen is absolutely 0%, but means that oxygen may be contained in an amount to an extent that it very slightly forms an oxide layer on surfaces of the fine particles.

Subsequently, the magnet material particles finely pulverized by the bead mill 116 or other pulverizing means are formed into a desired shape. For shaping of the magnet material particles, a mixture obtained by mixing the magnet material particles 115 finely pulverized in the above manner and a binder together, i.e., a composite material, is preliminarily prepared. As a resin material to be used as the binder, it is preferable to use a polymer containing no oxygen atom in its structure and having a depolymerization property. Further, it is preferable to use, as the resin material, a

thermoplastic resin so as to enable a residue of the composite material of the magnet material particles and the binder, generated when the composite material is formed into a desired shape, to be reused, and enable magnetic field orientation to be performed under the condition that the resin material is softened by heating the composite material. More specifically, a polymer is suitably used which comprises one or more polymers or copolymers formed from a monomer represented by the following general formula (1):

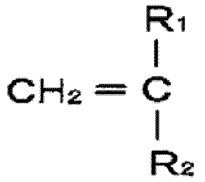

····(1)

(where each of R1 and R2 denotes one of a hydrogen atom, a lower alkyl group, a phenyl group and a vinyl group.)

Examples of a polymer satisfying the above conditions include: polyisobutylene (PIB) as a polymer of isobutylene; polyisoprene (isoprene rubber (IR)) as a polymer of isoprene; polypropylene, a poly($\alpha$-methylstyrene) polymerized resin as a polymer of $\alpha$-methylstyrene; polyethylene; polybutadiene (butadiene rubber (BR)) as a polymer of 1,3-butadiene; polystyrene as a polymer of styrene; a styrene-isoprene-styrene block copolymer (SIS) as a copolymer of styrene and isoprene; butyl rubber (IIR) as a copolymer of isobutylene and isoprene; a styrene-butadiene-styrene block copolymer (SBS) as a copolymer of styrene and butadiene; a styrene-ethylene-butadiene-styrene copolymer (SEBS) as a copolymer of styrene, ethylene and butadiene; a styrene-ethylene-propylene-styrene copolymer (SEPS) as a copolymer of styrene, ethylene and propylene; an ethylene-propylene copolymer (EPM) as a copolymer of ethylene and propylene; EPDM obtained by copolymerizing diene monomers together with ethylene and propylene; a 2-methyl-1-pentene polymerized resin as a polymer of 2-methyl-1-pentene; and a 2-methyl-1-butene polymerized resin as a polymer of 2-methyl-1-butene. A resin to be used as the binder may have a composition containing a polymer or copolymer of monomers containing an oxygen atom and/or a nitrogen atom (e.g., poly(butyl methacrylate) or poly(methyl methacrylate)) in a small amount. Further, a monomer which does not meet the general formula (1) may be partially copolymerized. Even in such a situation, it is possible to achieve the object of the present invention.

As a resin to be used as the binder, it is desirable, from a viewpoint of adequately performing magnetic field orientation, to use a thermoplastic resin capable of being softened at a temperature of 250°C or less, more specifically a thermoplastic resin having a glass-transition temperature or flow start temperature of 250°C or less.

In order to disperse the magnet material particles over the thermoplastic resin, it is desirable to add an orientation lubricant in an appropriate amount. As the orientation lubricant, it is desirable to add at least one selected from the group consisting of alcohol, carboxylic acid, ketone, ether, ester, amine, imine, imide, amide, cyanogen, phosphorous functional group, sulfonic acid, a composite material having an unsaturated bond such as a double bond or a triple bond, and a liquid, saturated hydrocarbon composite material. Two or more of them may be used in the form of a mixture. Further, in applying a magnetic field to the mixture of the magnet material particles and the binder, i.e., the composite material, to thereby magnetically orient the magnet material particles, as described later, the mixture is heated to allow such magnetic field orientation treatment to be performed under the condition that the binder component is softened.

By using a binder satisfying the above conditions to serve as the binder to be mixed with the magnet material particles, it is possible to reduce an amount of carbon and an amount of oxygen remaining in a sintered body after sintering. Specifically, the amount of carbon remaining in the sintered body after sintering may be reduced to 2000 ppm or less, preferably 1000 ppm or less. Further, the amount of oxygen remaining in the sintered body after sintering may be reduced to 5000 ppm or less, preferably 2000 ppm or less.

An addition amount of the binder is set to a value capable of, when shaping a slurry-form or heated and melted composite material, filling gaps among the magnet material particles so as to provide improved thickness accuracy to a shaped body obtained as a result of the shaping. For example, the ratio of the binder to a total amount of the magnet material particles and the binder is preferably set in the range of 1 wt% to 40 wt%, more preferably 2 wt% to 30 wt%, still more preferably 3 wt% to 20 wt%, particularly preferably 5 wt% to 15 wt%. Further, the ratio of the resin material to be used in the binder to a total amount of the magnet material particles and the resin material is preferably set in the range of 1 wt% to 30 wt%, more preferably in the range of 2 wt% to 20 wt%, still more preferably in the range of 3 wt% to 15 wt%, particularly preferably in the range of 3.5 wt% to 10 wt%.

In the following embodiments, the composite material is once formed into a shape other than that of an intended product, and a magnetic field is applied to the resulting shaped body to orient the magnet material particles in the magnet field, and thereafter, the resulting shaped body is formed into the shape of the intended product and then subjected to sintering treatment to obtain a product having a desired shape such as a trapezoidal shape as depicted, for example, in FIG. 1. Particularly, in the following embodiments, the mixture of the magnet material particles and the binder, i.e., a composite material 117, is once formed into a sheet-like green shaped body (hereinafter referred to as "green sheet"),

and then further formed into a shape for the orientation treatment. For forming the composite material, particularly, into a sheet shape, it is possible to employ: a forming method using, for example, a hot-melt coating process which comprises heating the composite material 117 as the mixture of the mixture of the magnet material particles and the binder, and then forming the melt into a sheet shape: a process which comprises putting the composite material 117 as the mixture of the magnet material particles and the binder into a forming die, and heating the composite material 117 while applying a pressure thereto, to thereby form the composite material into a sheet shape; a process which comprises extruding the composite material by an extruder to thereby form the composite material into a sheet shape; or a slurry coating process which comprises coating a slurry containing the magnet material particles, the binder and an organic solvent, on a substrate, to thereby form the slurry into a sheet shape.

In the following description, description will be made about formation of the green sheet using, particularly, the hot-melt coating process. However, the present invention is not limited to such a specific shaping process. For example, the composite material 117 may be put in a shaping die and shaped under a pressure of 0.1 to 100 MPa while heating at a temperature of room temperature to 300°C. More specifically, in this case, it is possible to employ a process which comprises applying an injection pressure to the composite material 117 heated to a softening temperature, so as to press and charge the composite material 117 into a die, to thereby form the composite material 117 into a sheet shape.

As previously mentioned, a binder is mixed with the magnet material particles finely pulverized using the bead mill 116 or the like to produce a clayey mixture of the magnet material particles and the binder, i.e., the composite material 117. Here, it is possible to use, as the binder, a mixture of a resin and an orientation lubricant, as mentioned above. As one example of the binder, it is preferable to use a thermoplastic resin comprising a polymer containing no oxygen atom in its structure and having a depolymerization property. Further, as the orientation lubricant, it is preferable to add at least one selected from the group consisting of alcohol, carboxylic acid, ketone, ether, ester, amine, imine, imide, amide, cyanogen, phosphorous functional group, sulfonic acid, and a compound having an unsaturated bond such as a double bond or a triple bond.

Among them, it is preferable to use a compound having an unsaturated bond. Examples of this type of compound include a compound having a double bond or a triple bond. Particularly, a compound having a triple bond is preferable, from a viewpoint of being capable of promising an effect of reducing crack in the sintered body.

As the compound having a triple bond, it is preferable to use a compound capable of being easily removed in the aftermentioned calcination treatment. Therefore, the compound to be used is preferably a compound having no hetero atom, particularly preferably a compound consisting only of hydrocarbon. Further, in order to enable stronger interaction with the surfaces of the magnet material particles to thereby bring out a higher orientation lubricating effect, the compound having a triple bond preferably has the triple bond at the end.

With regard to the compound having a triple bond, from a viewpoint of raising the boiling point thereof to facilitate handling, the number of carbon as a constituent element of the compound is preferably 10 or more, more preferably 14 or more, further preferably 16 or more, particularly preferably 18 or more. Although the upper limit of the carbon number is not particularly limited, it may be set to, e.g., 30 or less.

With regard to the compound having a double bond, from a viewpoint of enabling stronger interaction with surfaces of the magnet material particles to bring out a higher orientation lubricating effect, it is preferable to use a compound having a functional group with a hetero atom, and more preferably a compound having a functional group with a hetero atom at the end.

The number of carbon constituting the compound having a double bond is preferably 6 or more, more preferably 10 or more, further preferably 12 or more, particularly preferably 14 or more. Although the upper limit of the carbon number is not particularly limited, it may be set to, e.g., 30 or less. Further, the compounds having a triple bond and the compound having a double bond may be used in combination.

As previously mentioned, the addition amount of the binder is set such that the ratio of the binder to a total amount of the magnet material particles and the binder in the composite material 117 after the addition is preferably set in the range of 1 wt% to 40 wt%, more preferably 2 wt% to 30 wt%, still more preferably 3 wt% to 20 wt%, particularly preferably 5 wt% to 15 wt%. Further, the ratio of a resin material to be used in the binder to a total amount of the resin material and the magnet material particles is preferably set in the range of 1 wt% to 30 wt%, more preferably 2 wt% to 20 wt%, still more preferably 3 wt% to 15 wt%, particularly preferably 3.5 wt% to 10 wt%.

Here, an addition amount of the orientation lubricant is preferably determined depending on a particle size of the magnet material particles, and it is recommended to increase the addition amount as the particle size of the magnet material particles becomes smaller. Specifically, the addition amount may be set in the range of 0.01 weight parts to 20 weight parts, preferably in the range of 0.3 weight parts to 10 weight parts, more preferably in the range of 0.5 weight parts to 5 weight parts, particularly preferably in the range of 0.8 weight parts to 3 weight parts, with respect to 100 weight parts of the magnet material particles. If the addition amount is excessively small, a dispersion effect becomes poor, possibly leading to deterioration in orientation property. On the other hand, if the addition amount is excessively large, the lubricant is likely to contaminate the magnet material particles. The orientation lubricant added to the magnet material particles adheres onto surfaces of the magnet material particles, and acts to facilitate dispersion of the magnet

material particles to provide the clayey mixture, and to assist turning of the magnet material particles in the aftermentioned magnetic field orientation treatment. As a result, it becomes possible to facilitate orientation during application of a magnetic field so as to uniformize respective directions of the easy magnetization axes of the magnet material particles, into approximately the same direction, resulting in an increase in the degree of orientation. Particularly, in the case where the binder is mixed with the magnet material particles, the binder tends to be present around the surfaces of the magnet material particles, so that a frictional force against the magnet material particles during the magnetic field orientation treatment is increased, thereby possibly leading to deterioration in orientation property of the magnet material particles. Thus, the effect arising from addition of the orientation lubricant becomes more important.

Preferably, the mixing of the magnet material particles and the binder is performed in an atmosphere of inert gas such as nitrogen gas, Ar gas or He gas. The mixing of the magnet material particles and the binder is performed, for example, by charging the magnet material particles and the binder into a stirring machine and stirring them using the stirring machine. In this case, with a view to enhancing kneading performance, heating-stirring (stirring under heating) may be performed. It is also desirable to perform the mixing of the magnet material particles and the binder, in an atmosphere of inert gas such as nitrogen gas, Ar gas or He gas. Particularly, in the case where the coarsely-pulverized magnet material particles are finely pulverized by a wet process, the composite material 117 may be obtained by adding the binder to a solvent used for pulverization, without extracting the magnet material particles from the solvent, and, after kneading the resulting mixture, volatilizing the solvent.

Subsequently, the composite material 117 is formed into a sheet shape to prepare the aforementioned green sheet. Specifically, in case of employing the hot-melt coating process, the composite material 117 is heated and melted to have flowability, and then coated on a support substrate 118. Subsequently, the composite material 117 is solidified by heat dissipation to form an elongated strip-shaped green sheet 119 on the support substrate 118 (see FIG. 5(d)). In this case, although a temperature during heating and melting of the composite material 117 varies depending on a type and an amount of a binder used, it is typically set in the range of 50°C to 300°C. In this case, it is to be understood that the temperature needs to be set to a value greater than a flow start temperature of the binder used. On the other hand, in case of employing the slurry coating process, a slurry is prepared by dispersing the magnet material particles, the binder and optionally an orientation lubricant for facilitating the orientation, in a large volume of solvent, and the slurry is coated on the support substrate 118. Subsequently, the slurry is subjected to drying to volatilize the solvent therefrom to thereby form an elongated strip-shaped green sheet 119 on the support substrate 118.

Here, as a coating system for the melted composite material 117, it is preferable to use a system having excellent layer thickness controllability, such as a slot-die system or a calender roll system. Particularly, in order to realize high thickness accuracy, it is desirable to use a die system or a comma coating system which is a system having particularly excellent layer thickness controllability, i.e., a system capable of coating a layer having a highly-accurate thickness, on a surface of a substrate. For example, in the slot-die system, the composite material 117 after being heated to have flowability is pressure-fed from a gear pump into a die, and discharged from the die to perform coating. On the other hand, in the calender roll system, the composite material 117 is fed into a nip gap between two heated rolls, in a controlled amount, and the rolls are rotated to coat the composite material 117 melted by heat of the rolls, onto the support substrate 118. As one example of the support substrate 118, it is preferable to use a silicone-treated polyester film. Further, it is preferable to use a defoaming agent or perform vacuum heating defoaming to sufficiently defoam a layer of the coated and developed composite material 117 so as to prevent gas bubbles from remaining in the layer. Alternatively, the melted composite material 117 may be extruded onto the support substrate 118 while being formed into a sheet shape, by an extrusion forming or injection forming, instead of being coated on the support substrate 118, to thereby form the green sheet 119 on the support substrate 118.

In the embodiment depicted in FIG. 5, coating of the composite material 117 is performed using a slot-die 120. In a step of forming the green sheet 119 using this slot-die system, it is desirable to actually measure a sheet thickness of the coated green sheet 119, and adjust a nip gap between the slot-die 120 and the support substrate 118, by feedback control based on the actually-measured value. In this case, it is desirable to reduce a variation in an amount of the fluidic composite material 117 to be fed to the slot-die 120, as small as possible, e.g., to $\pm$ 0.1% or less, and further reduce a variation in coating speed as small as possible, e.g., to $\pm$ 0.1% or less. This control makes it possible to improve the thickness accuracy of the green sheet 119. As one example, with respect to a design value of 1 mm, the thickness accuracy of the green sheet 119 to be formed may be within $\pm$ 10%, preferably within $\pm$ 3%, more preferably within $\pm$ 1%. In the calender roll system, a film thickness of the composite material 117 to be transferred to the support substrate 118 can be controlled by feedback-controlling calendering conditions based on an actually-measured value in the same manner as that described above.

Preferably, the thickness of the green sheet 119 is set in the range of 0.05 mm to 20 mm. If the thickness is reduced to 0.05 mm or less, it becomes necessary to laminate a plurality of layers so as to achieve a required magnet thickness, resulting in reduced productivity.

Last of all, the green sheet 119 formed on the support substrate 118 by the hot-melt coating process is cut into a size corresponding to a desired magnet size to form a processing sheet piece 3. The processing sheet piece 3 can

be deemed as one example of the rare-earth magnet-forming material, because it will subsequently be set in a sintering die, and serves as a basis for the rare-earth sintered magnet. Further, the green sheet 119 serves as a raw material or a precursor member for the processing sheet piece, i.e., as a basis for the rare-earth sintered magnet. Thus, it is to be understood that the green sheet 119 falls into the concept of the rare-earth magnet-forming material. Further, it is possible to use, as the rare-earth magnet-forming material, not only a shaped body produced by the aforementioned green sheet forming method, but also a shaped body produced by a powder compacting method. This will be specifically described later.

The shape of the processing sheet piece 3 when it is cut out from the green sheet 119 is determined while taking into account the shape of the rare-earth sintered magnet 1 as a final product, and an actual size of the processing sheet piece 3 just after the cutting-out is determined while taking into account dimensional shrinkage in a pressing direction (pressure application direction) in a sintering step, so as to obtain a given magnet size after the sintering step. The sintering step is performed by pressure-sintering, as described later. Thus, although shrinkage occurs in the processing sheet piece 3 in the pressing direction (the direction indicated "β" in FIG. 1), a dimensional difference between the rare-earth sintered magnet 1 as a final product and the processing sheet piece 3 is in that the length "D" of a side of the rare-earth sintered magnet 1 as a final along the pressing direction "β" shrinks to about one-half of the length "d" of a side of the processing sheet 3 along the pressing direction "β", because the present invention can suppress anisotropic shrinkage. Here, since the rare-earth sintered magnet 1 is obtained by sintering the processing sheet piece 3 and magnetizing a resulting sintered body, the sintered body obtained by sintering the processing sheet piece 3 can be considered to have the same shape and size as those of the rare-earth sintered magnet 1.

(2) Orientation Step

The processing sheet piece 3 is heated, and, in this state, a parallel magnetic filed is applied to the processing sheet piece 3 along a direction indicated by the arrowed lines "G" (direction "G") in FIG. 1(a). During the heating and the magnetic field application, the processing sheet piece 3 is received inside a magnetic field-applying die having a cavity with a shape corresponding to that of the processing sheet piece 3. The direction "α" of the parallel magnetic field is orthogonal to both the upper surface 21 and the bottom surface 22 of the processing sheet piece 3. Through the magnetic field application, the easy magnetization axes of the magnet material particles comprised in the processing sheet piece 3 are oriented parallel to each other along the direction "G" of the magnetic field, i.e., along the thickness direction "α". As a result of the heating during the magnetic field application, the binder comprised in the processing sheet piece 3 is softened. This enables the magnet material particles to be turned within the binder, so that the easy magnetization axes of the magnet material particles are oriented in directions along the parallel magnetic field. In order to soften the binder, the processing sheet piece 3 is heated, for example, until the viscosity of the binder comprised in the processing sheet piece 3 becomes 1 to 1500 Pa · s, more preferably 1 to 500 Pa · s.

Although a temperature and a time period for heating the processing sheet piece 3 varies depending on the type and amount of the binder used, they may be set, e.g., in range of 40 to 250°C and in the range of 0.1 to 60 minutes, respectively. In either case, in order to soften the binder comprised in the processing sheet piece 3, the heating temperature needs to be set to a value equal to or greater than a glass-transition temperature or a flow start temperature of the binder used. Examples of means to heat the processing sheet piece 3 include a heating system using a hot plate, and a system using, as a heat source, a heating medium such as silicone oil. A magnetic field intensity during the magnetic field application may be set in the range of 5000 [Oe] to 150000 [Oe], preferably 10000 [Oe] to 120000 [Oe], particularly preferably 25000 [Oe] to 70000 [Oe]. As a result, the easy magnetization axes of the magnet material particles comprised in the processing sheet piece 3 are oriented parallel to each other in the direction "α" along the direction "G" of the parallel magnetic field. This magnetic field application step may be configured such that a magnetic field is simultaneously applied to a plurality of the processing sheet pieces 3. In this case, the parallel magnetic field may be simultaneously applied, using a die having a plurality of cavities, or a plurality of dies arranged side-by-side. The step of applying a magnetic field to the processing sheet piece 3 may be performed in concurrence with the heating step, or during a period after completion of the heating step and before solidification of the binder of the processing sheet piece 3.

(3) Calcination Step

The oriented sintering processing sheet piece 3 in which the easy magnetization axes are oriented is subjected to calcination treatment in a non-oxidizing atmosphere adjusted at an atmospheric pressure, or a pressure greater or less than atmospheric pressure such as 0.1 MPa to 70 MPa, preferably 1.0 Pa or 1.0 MPa, under a decomposition temperature of the binder, for a holding time of several hours to several ten hours, e.g., 5 hours.

In this treatment, it is recommended to use a hydrogen atmosphere or a mixed gas atmosphere of hydrogen and inert gas. In the case where the calcination treatment is performed in a hydrogen atmosphere, a supply amount of hydrogen during the calcination is set to, e.g., 5 L/min. The calcination treatment makes it possible to remove the binder,

i.e., an organic compound comprised in the composite material obtained by mixing the magnet material particles with the thermoplastic resin, by decomposing the organic compound to monomers through a depolymerization reaction or other reaction, and releasing the monomers. That is, decarbonizing which is treatment for reducing the amount of carbon remaining in the processing sheet piece 3 is performed.

Further, it is preferable to perform the calcination treatment under conditions which enable the amount of carbon remaining in the processing sheet piece 3 to become 2000 ppm or less, preferably 1000 ppm or less. This makes it possible to densely sinter the entire processing sheet piece 3 through subsequent sintering treatment to thereby suppress deteriorations in residual magnetic flux density and coercivity. Here, in the case where a pressurization condition during the calcination treatment is set to a pressure greater than atmospheric pressure, it is desirable to set the pressure to 15 MPa or less. Further, the pressurization condition may be set to a pressure greater than atmospheric pressure, more specifically, 0.2 MPa or more. In this case, an effect of reducing the amount of residual carbon can be particularly expected. Although a calcination temperature varies depending on the type of binder, the temperature may be set in the range of 250°C to 600°C, preferably 300°C to 550°C, such as 450°C.

In the above calcination treatment, it is preferable to set a temperature rise rate to a smaller value, as compared to typical sintering treatment of a rare-earth magnet. Specifically, the temperature rise rate may be set to 2°C/min or less, e.g., 1.5°C/min to obtain a preferable result. Thus, the calcination treatment is performed such that the calcination temperature is raised at a given temperature rise rate of 2°C/min or less, as depicted in FIG. 6, and, after reaching a predetermined setup temperature, i.e., the binder decomposition temperature, held at the setup temperature for several hours to several ten hours. As above, the temperature rise rate in the calcination treatment is set to a relatively small value, so that carbon in the processing sheet piece 3 is removed in a step-by-step manner without being rapidly removed. This makes it possible to reduce the amount of residual carbon to a sufficient level to thereby increase the density of a permanent magnet-forming sintered body after sintering. That is, by reducing the amount of residual carbon, it is possible to reduce voids in a permanent magnet. When the temperature rise rate is set to about 2°C/min, as mentioned above, the density of a permanent magnet-forming sintered body after sintering can be increased to 98% or more, e.g., 7.40 $g/cm^3$ or more. As a result, high magnetic properties can expected in a magnet after magnetization.

(4) Deoiling Step

Deoiling treatment may be performed before the calcination treatment for dissipating oil contents such as the orientation lubricant, plasticizer, etc. A temperature during the deoiling treatment varies depending on the type of oil contained, the temperature may be set in the range of 60 °C to 120 °C, preferably in the range of 80 °C to 100 °C. In the deoiling treatment, a preferably result can be obtained by setting the temperature rise rate to 5°C/min or less, e.g., 0.7°C/min. A more preferable result can be obtained by performing the deoiling treatment in an atmosphere at a reduced pressure, preferably of 0.01Pa to 20Pa, more preferably of 0.1Pa to 10Pa. Here, the magnetic properties of the rare-earth sintered magnet as a final product do not vary depending on whether or not the deoiling treatment is performed.

(5) Sintering Step

FIG. 7 schematically illustrates heat treatment to be performed in a sintering step. In this chart, the horizontal axis and the vertical axis represent time and temperature (°C), respectively. The sintering process comprises sintering treatment "A", high-temperature heat treatment "B" to be performed after the sintering treatment "A", and low-temperature heat treatment "C" to be performed after the high-temperature heat treatment "B". As a result of diligent researches, the present inventors found that properties of the sintered body obtained through the sintering step and the rare-earth sintered magnet as a final product are significantly improved by, after sintering treatment "A", performing high-temperature heat treatment "B" satisfying a given condition. The present inventors also found that a combination of the above high-temperature heat treatment "B" and sintering treatment "A" satisfying a given condition makes it possible to obtain an additional effect such as an anisotropic shrinkage suppressing effect. For convenience, the high-temperature heat treatment "B and the low-temperature heat treatment "C" will be explained as part of the sintering step, however, as is clear from the following explanations, each of these treatments is substantially a mere heat treatment, and is different from pressure sintering in the sintering treatment "A".

The sintering process is performed in a state in which the processing sheet piece 3 (see FIG. 1) is set inside a preliminarily-prepared sintering die (not depicted) comprising a pair of a male die half and a female die half. The sintering die has a cavity with a shape corresponding to that of the rare-earth sintered magnet as a final product, e.g., a cavity having a trapezoidal cross-section corresponding to that of the processing sheet piece 3. The processing sheet piece 3 is set inside the sintering die, in a state in which each of the easy magnetization axes thereof is oriented in one plane, i.e., is oriented in one plane defined by the direction "$\alpha$" and the direction "$\gamma$" in FIG. 1

< Sintering Treatment >

In the sintering treatment "A", the calcined processing sheet piece 3 is heated and sintered, while a pressing force is applied thereto by clamping the processing sheet piece 3 between the male die half and the female die half to load a press pressure thereon, that is, the calcined processing sheet piece 3 is subjected to pressure sintering.

The pressing direction is set to a direction (the direction "β" in FIG. 1) orthogonal to the orientation direction of the easy magnetization axes in the processing sheet piece 3 (the direction "G" in FIG. 1). By applying a pressure in this direction, it is possible to suppress a situation where the orientation of the easy magnetization axes given to the magnet material particles is changed, so that a sintered body having a higher orientation property can be obtained.

An initial load when the calcined processing sheet piece 3 is clamped between the male and female die halves is set to a relatively small given pressure, e.g., 0.5 MPa (this initial load is not particularly presented in FIG. 7). However, applying the initial load is not indispensable. In this state, the temperature of the processing sheet piece 3 is raised from room temperature to a pressure-raising initiation temperature at which the raising of the pressure is initiated. Preferably, raising of the temperature is performed at a constant temperature rise rate. The temperature rise rate may be from 3°C/min to 30°C/min, e.g., 20°C/min.

Raising of the pressure is initiated when the temperature reaches, e.g., 300°C (in the example depicted in FIG. 7, the pressure-raising initiation temperature is indicated at about 700°C). This is because, when the temperature reaches 300°C, fusion among the magnet material particles comprised in the rare-earth magnet-forming material starts to provide increased strength of the rare-earth magnet-forming material, so that it becomes possible to perform sintering under application of pressure without occurrence of a crack in the rare-earth magnet-forming material. Thus, the raising of the pressure may be initiated when the temperature reaches 300°C at lowest. However, it is to be understood that the raising of the pressure may be initiated at a temperature of 300°C or more. Specifically, the raising of the pressure is preferably initiated at a temperature of 500°C to 900°C, more preferably 700°C to 850°C. If the pressure-raising initiation temperature is set to an excessively high value, a sintering shrinkage of the rare-earth magnet-forming material causes a gap between the rare-earth magnet-forming material and the sintering die, and thereby the rare-earth magnet-forming material is applied with a pressure in the presence of the gap, leading to the occurrence of a crack or surface irregularity in the rare-earth magnet-forming material. Subsequently, the pressure is raised from the initial load at a constant pressure rise rate, until it reaches a predetermined ultimately achieving load. The pressure rise rate may be, e.g., 14 kPa/sec or more. For example, the ultimately achieving load (pressing force) is from 1 MPa to 30 MPa, preferably, from 3 MPa to 20 MPa, more preferably from 3 MPa to15 MPa. Particularly, it is preferable that the ultimately achieving load is set to 3 MPa or more. If the ultimately achieving load is set to less than 3 MPa, shrinkage of the processing sheet piece 3 occurs not only in the pressing direction but also in all directions, or the processing sheet piece 3 is undulated. Thus, even if the high-temperature heat treatment "B" is subsequently performed, it is difficult to control a shape or the like of the magnet as a final product. By setting the pressing force to at least 3 MPa or more, it becomes possible to facilitate control of the shape. Even after the pressure reaches the ultimately achieving load, the pressure application will continue until a shrinkage ratio in the pressing direction becomes substantially zero for a given time. The term "given time" here means, e.g., a duration of about 5 minutes in which a change rate per 10 seconds of the shrinkage in the pressing direction is maintained at zero. After confirming that the shrinkage rate in the pressing direction becomes substantially zero for the given time, the pressure application is terminated.

After reaching the pressure-raising initiation temperature, the processing sheet piece 3 is heated at the constant temperature rise rate, until the temperature reaches a predetermined first maximum achieving temperature. Preferably, the first maximum achieving temperature is set to greater than 900°C, e.g., in a reduced-pressure atmosphere at several Pa or less. If the first maximum achieving temperature is set to 900°C or less, a void is generated in the processing sheet piece 3, and, when the high-temperature heat treatment "B" is subsequently performed, shrinkage of the processing sheet piece 3 occurs not only in the pressing direction but also in all directions, leading to difficulty in controlling a shape or the like of the magnet as a final product. By setting the first maximum achieving temperature to greater than 900°C, it becomes possible to facilitate control of the shape. Preferably, the first maximum achieving temperature is determined while taking into account a particle size and a composition of the magnet material particles forming the processing sheet piece 3. Generally, when the particle size is relatively large, the first maximum achieving temperature needs to be set to a higher value. Further, when the content of a rare-earth substance is relatively small, the first maximum achieving temperature needs to be set to a higher value. Further, it is preferable that the pressure reaches the ultimately achieving load before the temperature reaches the first maximum achieving temperature.

By performing the above sintering treatment "A", it is possible to suppress variation in shrinkage arising during the sintering to obtain a rare-earth sintered magnet-forming sintered body 1A (sintered body 1A for forming the rare-earth sintered magnet 1) having a desired shape (see FIG. 1). Here, the rare-earth sintered magnet 1 as a final product has the same sixe and shape as those of the sintered body 1A. Thus, the rare-earth sintered magnet 1 depicted in FIG. 1(b) can be deemed as the sintered body 1A (this is also applied to the aftermentioned sintered bodies 1B, 1C). Further, in the sintering treatment "A" the calcined processing sheet piece 3 is sintered by heating it to the sintering temperature,

while applying a given magnitude of pressure thereto in a direction (the direction "β" in FIG. 1) orthogonal to the orientation direction of the easy magnetization axes (the direction "α" in FIG. 1), so that it is possible to suppress a situation where the orientation of the easy magnetization axes given to the magnet material particles is changed. Therefore, this production method makes it possible to obtain a magnet having a higher orientation property. Further, by passing through the sintering treatment "A", the resin material in the processing sheet piece 3, such as thermoplastic resin, is almost entirely released (vaporized) by sintering heat, and, even if it remains, the amount of remaining resin is extremely small, so that it is possible to form a sintered body 1A in which the magnet material particles in the processing sheet piece 3 from which the resin has been released are integrally sintered.

As a pressing-sintering technique to be used in the sintering treatment "A", it is possible to employ any heretofore-known technique such as hot press sintering, hot isostatic press (HIP) sintering, ultrahigh pressure synthesis sintering, gas pressure sintering, or spark plasma sintering (SPS). In particular, it is preferable to employ an inner-heat pressure sintering apparatus in which a heat source is installed inside a sintering furnace capable of applying a pressure in a uniaxial direction.

< High-Temperature Heat Treatment >

The sintered body 1A after being subjected to the sintering treatment "A" is cooled to room temperature, and heated to a given temperature again in the subsequent high-temperature heat treatment "B". The cooling to room temperature may be natural cooling. The heating is performed in a reduced-pressure atmosphere, more specifically, under a pressure at least lower than the pressing force in the sintering treatment "A". However, as long as the heating is performed in an atmosphere of inert gas such as argon gas, nitrogen gas, or helium gas, this atmosphere needs not be a reduced-pressure atmosphere. In the high-temperature heat treatment "B", the temperature of the sintered body 1A is raised to a second maximum achieving temperature preliminarily set for the high-temperature heat treatment, within a given period of time, e.g., within 10 hours, preferably within 5 hours, more preferably within 2 hours. The second maximum achieving temperature for the high-temperature heat treatment is set in the range of greater than 900°C to 1100°C. Further, the second maximum achieving temperature is set such that a difference from the first maximum achieving temperature reachable in the sintering treatment "A" is within 250°C, preferably within 150°C, more preferably within 100°C. By setting the difference from the first maximum achieving temperature reachable in the sintering treatment "A" to fall within the above range, it is possible to achieve both an increase in density after the sintering and an improvement in magnetic properties by the high-temperature heat treatment "B". After reaching the second maximum achieving temperature, the second maximum achieving temperature is held for a given period of time (interval (b) depicted in FIG. 7), e.g., for 1 to 50 hours. In the high-temperature heat treatment, the total amount of heat to be given to the sintered body is also important. Thus, this holding time is preferably set in relation to the second maximum achieving temperature. In other words, as long as the total heat amount is not substantially changed, the second maximum achieving temperature and/or the holding time may fluctuate to a certain degree, i.e., it is only necessary to hold the treatment temperature around the second maximum achieving temperature for about 1 to 50 hours. As can be derived from the aftermentioned FIG. 10, the second maximum achieving temperature and the holding time preferably satisfy the following relationship:

$$-1.13\,x + 1173 \geq y \geq -1.2x + 1166 \text{ (where } 1100°C \geq x \geq 900°C)$$

, where x (°C) denotes the second maximum achieving temperature, and y (hour) denotes the holding time at a temperature around the second maximum achieving temperature.

The setting of the second maximum achieving temperature is also influenced by an average particle size of the magnet material particles after the fine pulverization. For example, when the average particle size is 1 μm, the second maximum achieving temperature is preferably set to greater than 900°C, and, when the average particle size is 5 μm, the second maximum achieving temperature is preferably set to 1100°C or less. The average particle size is measured using a laser diffraction/scattering particle size distribution measuring device (device name: LA950; manufactured by Horiba Ltd.). Specifically, the magnet material particles after the fine pulverization are slowly oxidized at a relatively low oxidation rate. Then, a few hundred mg of the slowly-oxidized powder is uniformly mixed with silicone oil (product name: KF-96H-1 million cs; manufactured by Shin-Etsu Chemical Co., Ltd.) to form a paste-like mixture. Then, the paste-like mixture is clamped between quartz glass plates to obtain a test sample. (HORIBA paste method). In a graph presenting a particle size distribution (volume %), a value of D50 is defined as the average particle size. In a case where the particle size distribution has a double peak shape, D50 is calculated only with respect to a smaller peak of a particle size to obtain the average particle size.

< Low-Temperature Heat Treatment >

A sintered body 1B (see FIG. 1) after being subjected to the high-temperature heat treatment "B" is cooled to room temperature, and heated to a given temperature again in the subsequent low-temperature heat treatment "C". The cooling to room temperature may be natural cooling. The heating is performed in a reduced-pressure atmosphere, as with the high-temperature heat treatment "B". However, as long as the heating is performed in an atmosphere of inert gas such as argon gas, nitrogen gas, or helium gas, this atmosphere needs not be a reduced-pressure atmosphere. In the low-temperature heat treatment "C", the temperature of the sintered body 1B is raised to a third maximum achieving temperature preliminarily set for the low-temperature heat treatment, within a given period of time, e.g., within 10 hours, preferably within 5 hours, more preferably within 2 hours. The third maximum achieving temperature for the low-temperature heat treatment is set to a temperature less than the second maximum achieving temperature for the high-temperature heat treatment, in the range of 350°C to 650°C, preferably 450°C to 600°C, more preferably 450°C to 550°C. After reaching the third maximum achieving temperature, the third maximum achieving temperature is held for a given period of time (interval (c) depicted in FIG. 7), e.g., for 2 hours. Immediately after the elapse of the holding time, rapid cooling is preferably performed.

(6) Magnetization Step

For example, a sintered body 1C (see FIG. 1) after being subjected to the low-temperature heat treatment may be inserted into a magnet-insertion slot (not depicted) of a rotor core of an electric motor, in an un-magnetized state. Then, the sintered body 1C inserted into the slot is subjected to magnetization along the easy magnetization axes of the magnet material particles comprised therein, i.e., C axis. Through this magnetization, the sintered body 1C is formed as the rare-earth sintered magnet 1. For example, a plurality of the sintered body 1C each inserted into a respective one of a plurality of the slots of the rotor core are magnetized such that an N-pole and an S-pole are alternately arranged along a circumferential direction of the rotor core. As a result, permanent magnets can be produced. As a means to magnetize the sintered body 1C, it is possible to use any heretofore-known device, such as a magnetizing coil, a magnetizing yoke, or a capacitor type magnetizing power-supply device. It is to be understood that the sintered body 1C may be magnetized before being inserted into the slot to form a permanent magnet 1, and this magnetized magnet 1 may be inserted into the slot.

[3. Inventive Examples and Comparative Examples]

Examples relating to the method of the present invention (Inventive Examples) and Comparative Examples will be described below.

In Inventive Examples and Comparative Examples, sintered bodies produced under various conditions, and rare-earth sintered magnets obtained by magnetizing the sintered bodies, were evaluated and analyzed, in terms of magnetic properties and physical properties. Based on methods listed in the following sections (1) to (5), in regard to the magnetic properties, residual magnetic flux density (Br), coercivity (Hcj), Br (kG) + Hcj (kOe) and squareness ratio (Hk/HcJ) (%) were evaluated, and, in regard to the physical properties, anisotropic shrinkage suppression, post-heat treatment density (g/cm$^3$), post-sintering density (g/cm$^3$), post-heat treatment surface irregularity (undulation) ($\mu$m), post-sintering surface irregularity ($\mu$m) and heat treatment-caused shrinkage rate (%) were evaluated. Each of the magnets is a respective one of the sintered bodies after being magnetized. Thus, results of evaluation and analysis of the sintered body in regard to matters other than the magnetic properties are equivalent to those of the corresponding magnet.

(1) Residual magnetic flux density (Br), coercivity (Hcj), Br (kG) + Hcj (kOe), residual magnetic flux density (Br) and squareness ratio (Hk/HcJ)

Each of the obtained sintered bodies was subjected to polishing, and then subjected to measurements, using a BH tracer (TRF-5BH-25, manufactured by TOEI Industry CO., Ltd.). Here, Br and Hcj are in the trade-off relationship, and therefore it is possible to determine the level of the magnetic properties by calculating a sum of them.

(2) Evaluation of Anisotropic Shrinkage Suppression

A sample after the sintering was taken out of the sintering die, and conformability followability to the die was visually evaluated. When the sintered body conforms to the die, anisotropic shrinkage is suppressed, that is, shrinkage mainly occurs only in the pressing direction. In this case, the sample was evaluated as "○". When the sintered body fails to conform to the die, anisotropic shrinkage occurs. In this case, the sample was evaluated as "×". Here, the term "the sintered body conforms to the die" means a state in which, in the sintering treatment "A" of the sintering step, when

the processing sheet piece is clamped between the male die half and the female die half to apply the press pressure thereto, shrinkage occurs almost only in the press direction due to the press pressure by the male die half, but almost no shrinkage occurs in a direction between opposed contact surfaces of the processing sheet piece with the female die half, and thereby almost no gap is formed between the sintered body and the female die half, i.e., the sintered body conformed to the die. On the other hand, the term "the sintered body fails to conform to the die" means a state in which shrinkage also occurs in the direction between the opposed contact surfaces of the processing sheet piece with the female die half, and thereby a gap is formed between the sintered body and the female die half, i.e., the sintered body fails to conform to the die.

(3) Post-Heat Treatment Density (g/cm$^3$) and Post-Sintering Density (g/cm$^3$)

The term "post-sintering" means a state after, among the sintering treatment "A", the high-temperature heat treatment "B" and the low-temperature heat treatment "C" in the sintering step, the sintering treatment "A" is completed. The term "post-heat treatment" means a state after the sintering treatment "A" and the high-temperature heat treatment "B" are completed. The density after such the treatment(s) was measured based on the Archimedes' principle.

(4) Post-Heat Treatment Surface Irregularity ($\mu$m) and Post-Sintering Surface Irregularity ($\mu$m)

The meaning of each of the "post-sintering" and the "post-heat treatment" is as described in the section (3). The surface irregularity of the sintered body was measured, using a 3D measurement microscope (VR-3200) manufactured by Keyence Co. Specifically, a difference between the maximum height and the minimum height in a surface having the largest area among surfaces parallel to the pressing direction "$\beta$" (see FIG. 1) in the sintering treatment "A" was defined as a value of the surface irregularity. Such a value of the surface irregularity is closely related to the conformability to the die, i.e., the anisotropic shrinkage suppression. Thus, when the sintered body conforms to the die, the surface irregularity of the sintered body is reduced, and a good result can also be obtained in terms of the anisotropic shrinkage suppressing effect.

(5) Heat Treatment-Caused Shrinkage Rate (%)

Each volume of the sintered body before and after the high-temperature heat treatment "B" is calculated from its size, and then the heat treatment-caused shrinkage rate (%) is determined.

As rare-earth magnet-forming material, a processing sheet piece having one of a trapezoidal shape depicted in FIG. 8, and a rectangular parallelepiped shape depicted in FIG. 9. A sintered body 1C obtained by subjecting this processing sheet piece to all the sintering treatment "A", the high-temperature heat treatment "B" and the low-temperature heat treatment "C" in the sintering step was processed into a 7 mm-square cubed sample through polishing. The sample having one of the trapezoidal shape depicted in FIG. 8 and the rectangular parallelepiped shape depicted in FIG. 9 was extracted from an approximately central region of the sintered body 1C. Thus, the shape of the processing sheet piece never exerts influence on the property evaluation. In a case where the sample is insufficient in thickness, a plurality of the samples are laminated to secure a thickness of 7 mm. In order to evaluate the magnetic properties of the rare-earth sintered magnet 1, the sample was magnetized by applying an external magnetic field having a magnetic flux density of 7 T thereto. The maximum magnetic flux density of the magnetic field to be applied during the evaluation was set to 2.5 T. The result is presented in Table 1.

[TABLE 1]

| | Sintering Treatment A (Process Conditions) | | | | | High- Temperature Heat Treatment B | | Evaluation | | | | |
|---|---|---|---|---|---|---|---|---|---|---|---|---|
| | Shape | Load (MPa) | Pressure-Raising Initiation Temperature (°C) | Maximum Achieving Temperature (°C) | Temperature Rise Rate at and after Initiation of Rising of Pressure (°C/min) | Temperature (°C) | Holding Time (hour) | Br [T] | Hcj [kOe] | Br (kG) + Hcj (kOe) | Squareness Ratio Hk/HcJ (%) | Anisotropic Shrinkage Suppression |
| Inventive Example 1 | trapezoid | 11.8 | 700 | 970 | 20 | 970 | 8 | 1.45 | 17.1 | 31.6 | 94.9 | ○ |
| Inventive Example 2 | trapezoid | 11.8 | 300 | 970 | 20 | 970 | 8 | 1.44 | 17.2 | 31.6 | 94.3 | ○ |
| Inventive Example 3 | trapezoid | 11.8 | 500 | 970 | 20 | 970 | 8 | 1.45 | 16.4 | 30.9 | 92.2 | ○ |
| Inventive Example 4 | trapezoid | 19.6 | 700 | 970 | 20 | 970 | 9 | 1.42 | 17.3 | 31.5 | 91 | ○ |
| Inventive Example 5 | trapezoid | 19.6 | 700 | 970 | 20 | 970 | 10 | 1.42 | 17.4 | 31.6 | 91.2 | ○ |
| Inventive Example 6 | trapezoid | 19.6 | 700 | 970 | 20 | 970 | 11 | 1.43 | 17.5 | 31.8 | 92.3 | O |
| Inventive Example 7 | rectangular parallelepiped | 3.9 | 700 | 850 | 20 | 970 | 2 | 1.44 | 17.9 | 32.3 | 92.6 | ○ |
| Inventive Example 8 | rectangular parallelepiped | 3.9 | 700 | 880 | 20 | 970 | 2 | 1.43 | 17.2 | 31.5 | 92.5 | ○ |
| Inventive Example 9 | rectangular parallelepiped | 3.9 | 700 | 900 | 20 | 970 | 2 | 1.44 | 17.8 | 32.2 | 92.9 | ○ |

(continued)

| | Sintering Treatment A (Process Conditions) | | | | | High- Temperature Heat Treatment B | | Evaluation | | | | |
|---|---|---|---|---|---|---|---|---|---|---|---|---|
| | Shape | Load (MPa) | Pressure-Raising Initiation Temperature (°C) | Maximum Achieving Temperature (°C) | Temperature Rise Rate at and after Initiation of Rising of Pressure (°C/min) | Temperature (°C) | Holding Time (hour) | Br [T] | Hcj [kOe] | Br (kG) + Hcj (kOe) | Squareness Ratio Hk/HcJ (%) | Anisotropic Shrinkage Suppression |
| Comparative Example 1 | rectangular parallelepiped | 3.0 | 700 | 960 | 20 | - | - | 1.42 | 12 | 26.2 | 92.6 | ○ |
| Comparative Example 2 | rectangular parallelepiped | 3.0 | 700 | 960 | 20 | 700 | 5 | 1.42 | 12 | 26.2 | 87.9 | ○ |
| Comparative Example 3 | rectangular parallelepiped | 3.0 | 700 | 960 | 20 | 900 | 2 | 1.42 | 12.4 | 26.6 | 90.5 | ○ |
| Comparative Example 4 | trapezoid | 11.7 | 700 | 970 | 20 | - | - | 1.42 | 11.9 | 26.1 | 93.5 | ○ |
| Comparative Example 5 | trapezoid | - | 700 | 970 | 7.8 | - | - | 1.43 | 17.3 | 31.6 | 96.8 | × |

[Inventive Example 1]

A sintered body was produced using the trapezoidal-shaped processing sheet piece depicted in FIG. 8, in the following manner. No deoiling treatment was performed.

< Coarse Pulverization >

At room temperature, hydrogen was adsorbed onto an alloy obtained by a strip casting process, and the resulting alloy was held under a pressure of 0.85 MPa for one day. Subsequently, the resulting alloy was further held under a pressure of 0.2 MPa for one day, while being cooled by liquefied Ar, thereby inducing hydrogen cracking. The alloy had a composition "comprising Nd: 25.25 wt %, Pr: 6.75 wt %, B: 1.01 wt %, Ga: 0.13 wt %, Nb: 0.2 wt %, Co: 2.0 wt %, Cu: 0.13 wt %, and a remainder including Fe and Al: 0.10 wt%, and other unavoidable impurities".

< Fine Pulverization >

Fine pulverization was performed by jet mill pulverization in the following manner. 1 weight part of methyl caproate was mixed with 100 weight parts of the hydrogen-cracked coarse alloy powder, and the resulting mixture was fed to a helium jet mill pulverizer (device name: PJM-80HE, manufactured by Nippon Pneumatic Mfg. Co., Ltd. (NPK)) to pulverize the hydrogen-cracked coarse alloy powder. The resulting pulverized alloy particles were separated and collected by a cyclone system, and an ultrafine powder was removed. During the pulverization, a feed rate of the mixture was set to 1 kg/h, and an introduction pressure and a flow rate of He gas were set, respectively, to 0.6 MPa and 1.3 $m^3$/min. Further, an oxygen concentration was 1 ppm or less, and a dew point was - 75°C or less. The pulverized alloy particles had a particle size of about 1 $\mu$m.

< Kneading >

40 weight parts of 1-octene was added to 100 weight parts of the pulverized alloy powder, and the resulting mixture was subjected to stirring under heating at 60°C for 1 hour using a mixer (device name: TX-0.5, manufactured by INOUE MFG Inc.). Subsequently, after 1-octene and its reaction product were removed by heating under a reduced pressure, the alloy powder was subjected to dehydrogenation treatment. Then, a kneading step was performed. In the kneading step, 1.7 weight parts of 1-octadecyne and 4.3 weight parts of 1-octadecene as orientation lubricant, and 57.1 weight parts of a toluene solution (7 weight %) of polyisobutylene (PIB) (product name: B100, manufactured by BASF SE) as a polymer were mixed with respect to 100 weight parts of the alloy particles after being subjected to the octene treatment. Then, in a reduced-pressure atmosphere, the resulting mixture is stirred under heating at 70°C, using a mixer (device name: TX-0.5, manufactured by INOUE MFG Inc.), to remove toluene therefrom. Subsequently, the resulting mixture was kneaded under a reduced pressure for 2 hours to prepare a clayey composite material.

< Molding >

The composite material prepared through the kneading was press-molded using a SUS form, while being heated at 70°C.

< Orientation Step >

A parallel magnetic field was applied to the stainless steel (SUS) form receiving therein the molded composite material, using a super conductive solenoid coil (device name: JMTD-12T100 manufactured by JASTEC Co.). This orientation treatment was performed at a temperature of 80°C for 10 minutes while applying an external parallel magnetic field having a magnetic flux density of 7T. Then, an attenuating alternating magnetic field is applied to the composite material after being subjected to the orientation treatment, to demagnetize the oriented composite material.

< Calcination Step >

The composite material after being subjected orientation treatment was subjected to decarburization treatment under a pressurized hydrogen atmosphere at 0.8 MPa. The temperature is raised from room temperature to 500°C, and held at 500°C for 2 hours. The flow rate of hydrogen was from 1 to 3 L/min.

< Sintering Step >

(Sintering Treatment A)

After inserting the decarbonized sample into a hollow cavity of a graphite die extending in a length direction thereof, the pressure sintering was performed under a vacuum atmosphere, while inserting a graphite pressing pin into the hollow cavity to press the graphite pressing pin against the sample. The pressing direction was set along a length direction (a direction perpendicular to the orientation direction) of the sample. The temperature was raised from normal temperature to the pressure-raising initiation temperature at a rate of 20°C/min, and further raised to 970°C which is the first maximum achieving temperature. In this process, a pressure of 0.1 MPa was applied as the initial load, and the pressure-raising initiation temperature, the pressure rise rate and the ultimately achieving load were set, respectively, to 700°C, 50 kPa/sec, and 11.8 MPa. After reaching 970°C as the first maximum achieving temperature, the application of a pressure of 11.8 MPa was maintained until a shrinkage rate in the pressing direction, or a change rate per 10 sec of the shrinkage in the pressing direction, becomes zero.

(High-Temperature Heat Treatment B)

The sample after being subjected to the sintering treatment "A" was cooled to room temperature, and then subjected to the high-temperature heat treatment "B" under a reduced-pressure atmosphere. In the high-temperature heat treatment, the second maximum achieving temperature was set to 970°C, and the temperature was raised thereto by taking 1 hour and 15 minutes. Further, the holding time was set to 8 hours.

(Low-Temperature Heat Treatment C)

The sample after being subjected to the high-temperature heat treatment "B" was cooled to room temperature, and then subjected to the low-temperature heat treatment "C". In the low-temperature heat treatment, the third maximum achieving temperature was set to 500°C, and the temperature was raised thereto by taking 30 minutes. Further, the holding time was set to 1 hour. After the elapse of the holding time, the sample was rapidly cooled by blowing air thereonto.

As is evident from Table 1, the sample in Inventive Example 1 could suppress anisotropic shrinkage while bringing out high magnetic properties. Specifically, in regard to the magnetic property "Br [kG] + Hcj [kOe]", a difference from a value obtained in a sample of Comparative Example 5 sintered without pressure application could be controlled to fall within - 4.5, i.e., the "Br [kG] + Hcj [kOe] could be controlled to become 27.1 or more. Further, the squareness ratio Hk/HcJ could be controlled to become 80% or more.

[Inventive Examples 2 to 9, and Comparative Examples 1 to 5]

Respective sintered bodies in Inventive Examples 2 to 9 and Comparative Examples 1 to 5 were obtained in the same manner as that in Inventive Example 1, except that one or more of the conditions were changed as presented in Table 1.

As is evident from Inventive Examples 2 to 9, by sintering performing the high-temperature heat treatment "B" at 970°C for 2 to 11 hours after the pressure, samples of Inventive Examples 2 to 9 could exhibit a coercivity Hcj of 16.4 [kOe] or more, and further could exhibit a squareness ratio Hk/HcJ of 90% or more.

On the other hand, as is seen in Comparative Examples 1 and 4, in samples prepared without the high-temperature heat treatment "B", a limited coercivity Hcj as extremely low as about 12 [kOe] could be obtained, although the squareness ratio Hk/HcJ (%) was greater than 90%.

Further, as is seen in Comparative Examples 2 and 3, in samples where the temperature of the high-temperature heat treatment "B" is as low as 700°C or 900°C, almost no improvement in coercivity was observed, as compared to samples of Comparative Examples 1 and 4 prepared without the high-temperature heat treatment "B". As is evident from description of the aforementioned Patent Documents 2 and 3, the heat treatment temperature after the pressure sintering which has heretofore been used to produce sintering magnets are 900°C or less in many cases. From this, it is apparent that heat treatment in a commonly-used temperature range has almost no effect. Further, as is evident from Comparative Example 5, in the case where sintering is performed without pressure application, the result was that anisotropic shrinkage is not suppressed, although the magnetic properties are sufficiently high.

Further, as is evident from Inventive Examples 2 and 3, the pressure-raising initiation temperature can be set to 300°C or 500°C without any problem. This shows that, even if the pressure-raising initiation temperature is set to such a relatively low temperature, it is possible to achieve a balance between the magnetic properties and the anisotropic shrinkage suppression.

[Inventive Examples 10 to 17, and Comparative Examples 6 and 7]

Sintered bodies produced by changing one or more of the conditions in Table 1, or rare-earth sintered magnets obtained by magnetizing these sintered bodies were subjected to the same evaluation and analysis as those in Table 1. A result of the evaluation is presented in Table 2. Any condition other than conditions unique to Table 2 is the same as that in the Inventive Example 1.

[TABLE 2]

| | Process Conditions | | | Sintering Treatment A | | | | | | | High-Temperature Heat Treatment B | | low-temperature heat treatment C | | Evaluation | | | | |
|---|---|---|---|---|---|---|---|---|---|---|---|---|---|---|---|---|---|---|---|
| | Shape | Alloy Composition | Deoiling | Initial Load (MPa) | Temperature Rise Rate before Initiation f Pressure (°C/min) | Pressure-Raising Initiation Temperature (°C) | Load Rise Rate (kPa/s) | Load (MPa) | First Maximum Achieving Temperature (°C) | Temperature Rise Rate at and after Initiation of Raising of Pressure (°C/min) | Second Maximum Achieving Temperature (°C) | Holding Time of Second Maximum Achieving Temperature (hour) | Third Maximum Achieving Temperature (°C) | Holding Time of Third Maximum Achieving Temperature (hour) | Br | Hcj | Br (kG) + Hcj (kOe) | Squareness Ratio Hk/HcJ (%) | Anisotropic Shrinkage Suppression |
| Inventive Example 10 | rectangular parallelepiped | B | With | 0.5 | 20 | 700 | 16.7 | 5.0 | 950 | 20 | 1030 | 2 | 480 | 1 | 1.3 | 20.9 | 33.9 | 94.2 | ○ |
| Inventive Example 11 | rectangular parallelepiped | B | With | 0.5 | 20 | 700 | 16.7 | 5.0 | 970 | 20 | 1030 | 2 | 480 | 1 | 1.31 | 21.0 | 34.1 | 94.0 | ○ |
| Comparative Example 6 | rectangular parallelepiped | B | With | 0.5 | 20 | 700 | 16.7 | 5.0 | 1000 | 20 | - | - | 480 | 1 | 1.29 | 16.1 | 29.0 | 69.2 | ○ |
| Inventive Example 12 | rectangular parallelepiped | B | With | 0.5 | 20 | 700 | 16.7 | 5.0 | 1000 | 20 | 1030 | 2 | 480 | 1 | 1.3 | 20.6 | 33.6 | 94.2 | ○ |

(continued)

| | Process Conditions | | | Sintering Treatment A | | | | | | | High-Temperature Heat Treatment B | | low-temperature heat treatment C | | Evaluation | | | | |
|---|---|---|---|---|---|---|---|---|---|---|---|---|---|---|---|---|---|---|---|
| | Shape | Alloy Composition | Deoiling | Initial Load (MPa) | Temperature Rise Rate before Initiation f Pressure (°C/min) | Pressure-Raising Initiation Temperature (°C) | Load Rise Rate (kPa/s) | Load (MPa) | First Maximum Achieving Temperature (°C) | Temperature Rise Rate at and after Initiation of Raising of Pressure (°C/min) | Second Maximum Achieving Temperature (°C) | Holding Time of Second Maximum Achieving Temperature (hour) | Third Maximum Achieving Temperature (°C) | Holding Time of Third Maximum Achieving Temperature (hour) | Br | Hcj | Br (kG) + Hcj (kOe) | Squareness Ratio Hk/HcJ (%) | Anisotropic Shrinkage Suppression |
| Inventive Example 13 | rectangular parallelepiped | B | With | 0.5 | 20 | 700 | 16.7 | 5.0 | 1000 | 20 | 1030 | 5 | 480 | 1 | 1.3 | 20.6 | 33.6 | 97.3 | ○ |
| Inventive Example 14 | rectangular parallelepiped | B | With | 0.5 | 20 | 700 | 16.7 | 5.0 | 1030 | 20 | 1030 | 5 | 480 | 1 | 1.3 | 20.0 | 33.0 | 94.8 | ○ |
| Comparative Example 7 | rectangular parallelepiped | B | Without | - | 5.6 | - | - | - | 1030 | 5.6 | - | - | 480 | 1 | 1.33 | 20.4 | 33.7 | 95.2 | × |
| Inventive Example 15 | rectangular parallelepiped | A | Without | 0.5 | 20 | 750 | 16.7 | 5.0 | 950 | 20 | 1030 | 2 | 480 | 1 | 1.34 | 14.6 | 28.0 | 94.9 | ○ |

(continued)

| | Process Conditions | | | Sintering Treatment A | | | | | | | High-Temperature Heat Treatment B | | low-temperature heat treatment C | | Evaluation | | | | |
|---|---|---|---|---|---|---|---|---|---|---|---|---|---|---|---|---|---|---|---|
| | Shape | Alloy Composition | Deoiling | Initial Load (MPa) | Temperature Rise Rate before Initiation f Pressure (°C/min) | Pressure-Raising Initiation Temperature (°C) | Load Rise Rate (kPa/s) | Load (MPa) | First Maximum Achieving Temperature (°C) | Temperature Rise Rate at and after Initiation of Raising of Pressure (°C/min) | Second Maximum Achieving Temperature (°C) | Holding Time of Second Maximum Achieving Temperature (hour) | Third Maximum Achieving Temperature (°C) | Holding Time of Third Maximum Achieving Temperature (hour) | Br | Hcj | Br (kG) + Hcj (kOe) | Squareness Ratio Hk/HcJ (%) | Anisotropic Shrinkage Suppression |
| Inventive Example 16 | rectangular parallelepiped | A | Without | 0.5 | 20 | 750 | 16.7 | 5.0 | 950 | 20 | 1030 | 4 | 480 | 1 | 1.34 | 14.8 | 28.2 | 97.9 | ○ |
| Inventive Example 17 | rectangular parallelepiped | A | Without | 0.5 | 20 | 750 | 16.7 | 5.0 | 950 | 20 | 1030 | 6 | 480 | 1 | 1.33 | 14.7 | 28.0 | 95.2 | ○ |

In Table 2, the alloy composition "A" means the alloy composition used in Inventive Example 1, and the alloy composition "B" means a composition "comprising Nd: 22.25 wt %, Dy: 3.00 wt%, Pr: 6.75 wt %, B: 1.01 wt %, Ga: 0.13 wt %, Nb: 0.2 wt %, Co: 2.0 wt %, Cu: 0.13 wt %, and a remainder including Fe and Al: 0.10 wt%, and other unavoidable impurities".

In Table 2, the particle size of the finely pulverized alloy powder serving as a basis for the rare-earth magnet-forming material was set to about 3 μm by setting the feed rate of the raw material mixture during the pulverization to 4.3 kg/h.

Further, in the deoiling presented in Table 2, the oriented composite material, i.e., the composite material inserted into a hollow cavity of a graphite die extending in a direction perpendicular to the orientation direction (in a length direction thereof), was subjected to deoiling treatment under a vacuum atmosphere. A rotary pump was used as an evacuation pump for providing a vacuum atmosphere, and the temperature was raised from room temperature to 100°C by taking 2 hours, and then held at 100°C for 50 hours. Subsequently, the calcination step was performed.

As is evident from Inventive Examples 10 to 17, high magnetic properties can be brought out by going through the high-temperature heat treatment "B" to be performed at a temperature greater than 900°C, after the sintering treatment "A", i.e., pressure sintering, even if the particle size of the pulverized particles varies. Specifically, in regard to the magnetic property "Br (kG) + Hcj (kOe)", a difference from a value obtained in a sample of Comparative Example 7 sintered without pressure application could be controlled to fall within - 4.5, i.e., the "Br (kG) + Hcj (kOe)" could be controlled to become 29.2 or more. Further, the squareness ratio Hk/HcJ could be controlled to become 80% or more. Comparative Example 7 shows that, when a sample is sintered without pressure application, anisotropic shrinkage is not suppressed, although the magnetic properties are sufficiently high. This result is consistent with the result of Comparative Example 5.

On the other hand, as is evident from Comparative Example 6, in the case where the high-temperature heat treatment is not performed at a temperature of greater than 900°C, the result was that both the coercivity and the squareness ratio are insufficiently low, although anisotropic shrinkage is suppressed. Further, in Comparative Example 7 where the pressure sintering is not performed, the result is that anisotropic shrinkage is not suppressed, although the magnetic properties are sufficiently high.

[Inventive Examples 18 to 30 (not according to the invention), Inventive Examples 31, 22 and 33, and Comparative Examples 8 and 9]

Respective sintered bodies in Inventive Examples 18 to 33 and Comparative Examples 8 and 9 were obtained in the same manner as that in Inventive Example 1, except that one or more of the conditions were changed as presented in Table 3. In these Examples, an alloy powder pulverized to have an average particle size of 3 μm using a jet mill was used. Further, the pressure rise rate in the sintering treatment "A", i.e., a time necessary to raise the pressure from the initial load to the preliminarily-set first maximum achieving temperature, was set to 5 minutes, and the holding time at the first maximum achieving temperature was set to 10 minutes. Here, the initial load was 2.6 MPa.

[TABLE 3]

| | Sintering Treatment A | | | | High- Temperature Heat Treatment B | | Evaluation | | | | | |
|---|---|---|---|---|---|---|---|---|---|---|---|---|
| | Load (MPa) | Pressure-Raising Initiation Temperature (°C) | Maximum Achieving Temperature (°C) | Temperature Rise Rate at and after Initiation of Rising of Pressure (°C/min) | Temperature (°C) | Holding Time (hour) | Br [T] | Hcj [kOe] | Br(kG) + Hcj (kOe ) | Squareness Ratio Hk/Hcj (%) | Anisotropic Shrinkage Suppression | Post-Heat Treatment Density (g/cm$^3$) |
| Comparartive Example 8 | 13 | 700 | 970 | 18 | - | - | 1.33 | 9 | 22.3 | 75.6 | ○ | 7.54 |
| Comparartive Example 9 | 13 | 700 | 970 | 18 | 850 | 10 | 1.35 | 9.1 | 22.6 | 79.5 | ○ | 7.52 |
| Comparartive Example 10 | 13 | 700 | 970 | 18 | 900 | 10 | 1.36 | 9.8 | 23.4 | 79.1 | ○ | 7.54 |
| Inventive Example 18* | 13 | 700 | 970 | 18 | 930 | 10 | 1.35 | 11.2 | 24.7 | 82.5 | ○ | 7.54 |
| Inventive Example 19* | 13 | 700 | 970 | 18 | 930 | 50 | 1.36 | 13.3 | 26.9 | 94.4 | ○ | 7.51 |
| Inventive Example 20* | 13 | 700 | 970 | 18 | 950 | 10 | 1.36 | 12 | 25.6 | 89.2 | O | 7.51 |
| Inventive Example 21* | 13 | 700 | 970 | 18 | 950 | 40 | 1.37 | 13.2 | 26.9 | 96 | O | 7.54 |
| Inventive Example 22* | 13 | 700 | 970 | 18 | 970 | 15 | 1.36 | 13.8 | 27.4 | 93.2 | ○ | - |
| Inventive Example 23* | 13 | 700 | 970 | 18 | 970 | 20 | 1.38 | 14.1 | 27.9 | 95.5 | ○ | - |
| Inventive Example 24* | 13 | 700 | 970 | 18 | 1000 | 6 | 1.38 | 13.6 | 27.4 | 93.8 | ○ | - |
| Inventive Example 25* | 13 | 700 | 970 | 18 | 1000 | 8 | 1.38 | 13.5 | 27.3 | 95.9 | ○ | - |
| Inventive Example 26* | 13 | 700 | 970 | 18 | 1000 | 10 | 1.37 | 13.6 | 27.3 | 96.8 | ○ | 7.54 |

(continued)

| | Sintering Treatment A | | | | High- Temperature Heat Treatment B | | Evaluation | | | | | |
|---|---|---|---|---|---|---|---|---|---|---|---|---|
| | Load (MPa) | Pressure-Raising Initiation Temperature (°C) | Maximum Achieving Temperature (°C) | Temperature Rise Rate at and after Initiation of Rising of Pressure (°C/min) | Temperature (°C) | Holding Time (hour) | Br [T] | Hcj [kOe] | Br(kG) + Hcj (kOe ) | Squareness Ratio Hk/Hcj (%) | Anisotropic Shrinkage Suppression | Post-Heat Treatment Density (g/cm$^3$) |
| Inventive Example 27* | 13 | 700 | 970 | 18 | 1000 | 30 | 1.37 | 13.4 | 27.1 | 95.7 | ○ | - |
| Inventive Example 28* | 13 | 700 | 970 | 18 | 1000 | 40 | 1.38 | 12.7 | 26.5 | 96.3 | ○ | - |
| Inventive Example 29* | 13 | 700 | 970 | 18 | 1000 | 50 | 1.38 | 10.6 | 24.4 | 93.5 | O | - |
| Inventive Example 30* | 13 | 700 | 970 | 18 | 1030 | 8 | 1.35 | 13.9 | 27.4 | 83.3 | ○ | - |
| Inventive Example 31 | 25.6 | 700 | 950 | 20 | 1000 | 10 | 1.37 | 13.5 | 27.2 | 94.5 | ○ | - |
| Inventive Example 32 | 25.6 | 700 | 950 | 20 | 980 | 15 | 1.33 | 14.8 | 28.1 | 93.7 | ○ | - |
| Inventive Example 33 | 25.6 | 700 | 950 | 20 | 980 | 29 | 1.35 | 14.9 | 28.4 | 96.5 | ○ | - |

*not according to the invention

As is evident from Comparative Example 8, in the case where the high-temperature heat treatment "B" is not performed after the sintering treatment "A", the result was that the magnetic properties are insufficiently low, even when using the pulverized power of alloy A having an average particle size of 3 μm. Further, as is evident from Comparative Examples 9 and 10, in the case where the high-temperature heat treatment "B" is performed at a temperature of 850°C to 900°C for 10 hours, the magnetic properties were only slightly improved.

In Inventive Examples 18 to 30, although the evaluation was performed under the contrition that the temperature of the high-temperature heat treatment "B" is changed in the range of 930°C to 1030°C, the magnetic properties are significantly improved on any condition, as compared to Comparative Example 8 where the high-temperature heat treatment "B" is not performed. Specifically, in regard to the magnetic property "Br [kG] + Hcj [kOe]", a difference from a value obtained in a sample of the aforementioned Comparative Example 8 sintered without pressure application could be controlled to fall within - 4.5, i.e., the "Br [kG] + Hcj [kOe]" could be controlled to become 27.8 or more. Further, the squareness ratio Hk/HcJ could be controlled to become 80% or more. Further, in regard to a duration time of the high-temperature heat treatment "B", when the heat treatment temperature is relatively low, the duration time is preferably set to a relatively large value. On the other hand, when the heat treatment temperature is relatively high, a tendency was observed that the magnetic properties can be significantly improved even when the duration time is set to a relatively small value.

The Inventive Examples 31 to 33 where the pressing force in the sintering treatment "A" is set to 25.6 MPa shows that, even in the case where the pressing force is set to a relatively large value, the magnetic properties can be significantly improved by performing the high-temperature heat treatment "B".

In all of Inventive Examples 10 to 33, due to the pressure application in the sintering treatment "A", sintering shrinkage occurred mainly in a direction parallel to the pressing direction. This provides good conformability to the pressure sintering die, so that it is possible to control the shape of the sintered body in an intended manner.

[Inventive Examples 34 to 38 (not according to the invention), and Comparative Example 11]

Respective sintered bodies in Inventive Examples 34 to 38 and Comparative Example 11 were obtained in the same manner as that in Inventive Example 1, except that one or more of the conditions were changed as presented in Table 4. In these Examples, an alloy powder pulverized to have an average particle size of 3 μm using a jet mill was used. Further, the pressure rise rate in the sintering treatment "A", i.e., a time necessary to raise the pressure from the initial load to the preliminarily-set first maximum achieving temperature, was set to 5 minutes, and the holding time at the first maximum achieving temperature was set to 10 minutes. Here, the initial load was 1.3 MPa in Inventive Example 34, and 2.6 MPa in Inventive Examples 35 to 38.

[TABLE 4]

| | Sintering Treatment A | | | | | High-Temperature Heat Treatment B | | Evaluation | | | | | | | | | | | |
|---|---|---|---|---|---|---|---|---|---|---|---|---|---|---|---|---|---|---|---|
| | Load (MPa) | Pressu re-Raising Initiation Temperature (°C) | First Maximum Achieving Temperature (°C) | Holding Time of First Maximum Achieving Tempera-ture (min) | Tempera-ture Rise Rate at and after Initiation of Rising of Pressure (°C/min) | Second Maximum Achieving Temperature (°C) | Holding Time of Second Maximum Achieving Temperature (hour) | Br (T) | Hcj (kOe) | Br (kG) + Hcj (kOe) | Squareness Ratio Hk/Hcj (%) | Anisotropic Shrinkage Suppression | Post-Sintering Density (g/cm $^3$) | Post-Sintering Surface Irregularity (μm) | Post -Heat Treatment Density (g/c m$^3$) | Post-Heat Treatment Surface Irregularity (μm) | Heat Treatment-Caused Shrinkage (%) |
| Comparative Example 11 | - | - | 1000 | 120 | - | - | | 1.38 | 14 | 27.8 | 95.8 | × | 7.54 | - | - | - | - |
| Inventive Example 34* | 2.0 | 700 | 970 | 30 | 18 | 1000 | 10 | 1.39 | 13.4 | 27.3 | 97.2 | × | 7.4 | 510 | 7.50 | 460 | 1.6 |
| Inventive Example 35* | 3.0 | 700 | 970 | 30 | 18 | 1000 | 10 | 1.38 | 13.9 | 27.7 | 97.7 | ○ | 7.54 | 230 | 7.57 | 250 | 0.4 |
| Inventive Example 36* | 5.0 | 700 | 970 | 30 | 18 | 1000 | 10 | 1.37 | 14.4 | 28.1 | 96.9 | O | 7.54 | 100 | 7.58 | 210 | 0.2 |

(continued)

| | Sintering Treatment A | | | | | High-Temperature Heat Treatment B | | Evaluation | | | | | | | | | | |
|---|---|---|---|---|---|---|---|---|---|---|---|---|---|---|---|---|---|---|
| | Load (MPa) | Pressure-Raising Initiation Temperature (°C) | First Maximum Achieving Temperature (°C) | Holding Time of First Maximum Achieving Temperature (min) | Temperature Rise Rate at and after Initiation of Rising of Pressure (°C/min) | Second Maximum Achieving Temperature (°C) | Holding Time of Second Maximum Achieving Temperature (hour) | Br (T) | Hcj (kOe) | Br (kG) + Hcj (kOe) | Squareness Ratio Hk/Hcj (%) | Anisotropic Shrinkage Suppression | Post-Sintering Density (g/cm $^3$) | Post-Sintering Surface Irregularity (μm) | Post-Heat Treatment Density (g/cm$^3$) | Post-Heat Treatment Surface Irregularity (μm) | Heat Treatment-Caused Shrinkage (%) |
| Inventive Example 37* | 13.0 | 700 | 970 | 10 | 18 | 1000 | 10 | 1.36 | 13.6 | 27.2 | 96.8 | ○ | 7.48 | - | 7.58 | - | 1.8 |
| Inventive Example 38* | 40.0 | 700 | 970 | 10 | 18 | 980 | 20 | 1.36 | 11.4 | 25.0 | 82.4 | ○ | 7.55 | 40 | 7.58 | 200 | 0.8 |

*not according to the invention

In Comparative Example 11, sintering was performed without pressure application during the sintering treatment "A". Although the magnetic properties are sufficiently high because of no pressure application, shrinkage during the sintering occurs in all direction. This provides poor conformability to the sintering die, resulting in failing to control the shape of the sintered body in an intended manner.

In Inventive Examples 34 to 38, the evaluation was performed under the contrition that the pressing force in the sintering treatment "A" is changed in the range of 2.0 to 40.0 MPa. As a result, even in such a range, the magnetic properties could be improved by the high-temperature heat treatment "B". Specifically, a difference from a value of the magnetic property "Br [kG] + Hcj [kOe]" in Comparative Example 11 where a sample using the same alloy powder is subjected to sintering without pressure application could be controlled to fall within - 4.5, and the squareness ratio Hk/HcJ could be controlled to become 80% or more.

However, with regard to the anisotropic shrinkage suppressing effect, it tends to become better as the pressing force becomes higher. For example, by applying a pressing force of 3.0 MPa or more, the surface irregularity of the sintered body after the sintering treatment "A" and the high-temperature heat treatment "B" could be reduced to 300 μm or less. This is probably because, when the pressing force is set to 3.0 MPa or more, shrinkage during the sintering occurs mainly in a direction parallel to the pressing direction to provide good conformability to the pressure sintering die, so that it becomes possible to control the shape of the sintered body in an intended manner.

Further, even in the case where the pressing force is set to 40.0 MPa, a difference from a value of the magnetic property "Br [kG] + Hcj [kOe]" in Comparative Example 11 where a sample using the same alloy powder is subjected to sintering without pressure application could be controlled to fall within - 4.5, and the squareness ratio Hk/HcJ could be controlled to become 80% or more. However, in this case, the magnetic property improving effect by the high-temperature heat treatment "B" tended to decrease, and the frequency of occurrence of a crack in the sintered body after the pressure sintering tended to increase.

Considering the above, the maximum value of the pressing force in the sintering treatment "A" is preferably from 3 MPa to less than 40 MPa. Further, by setting the maximum value of the pressing force in the sintering treatment "A" to 3 MPa or more, the density of the sintered body after the sintering treatment "A" could be controlled to become 7.3 $g/cm^3$ or more. As a result, a change in size (shrinkage rate) of the sintered body can be suppressed even if the high-temperature heat treatment "B" is performed.

[Inventive Examples 39, 40 and 37 (not according to the invention)]

Respective sintered bodies in Inventive Examples 39 and 40 were obtained in the same manner as that in Inventive Example 1, except that one or more of the conditions were changed as presented in Table 5. In these Examples, an alloy powder pulverized to have an average particle size of 3 μm using a jet mill was used. Further, the pressure rise rate in the sintering treatment "A", i.e., a time necessary to raise the pressure from the initial load to the preliminarily-set first maximum achieving temperature, was set to 5 minutes, and the holding time at the first maximum achieving temperature was set to 10 minutes. Here, the initial load was 2.6 MPa.

[TABLE 5]

| | Sintering Treatment A | | | | High- Temperatu re Heat Treatment B | | Evaluation | | | | | | | | | |
|---|---|---|---|---|---|---|---|---|---|---|---|---|---|---|---|---|
| | Load (MPa ) | First Maxi- mum Achiev- ing Temper- atu re (°C) | Holdin g Time of First Maxi mum Achie ving Tempe rature (min) | Tempe rature Rise Rate at and af- ter Initiati on of Ris- ing of Pressu re (°C/mi n) | Secon d Maxi mum Achie ving Tempe rature (°C) | "Holdin g Time of Second Maxim um Achievi ng Temper ature (hour) | Br (T) | Hcj (kOe) | Br (kG ) + Hcj (kO e) | Squar eness Ratio Hk/H cj (%) | Anisot ropic Shrink age Suppre ssion | Post-Sin tering Density (g/cm$^3$) | Post-Si ntering Surfac e Irregul ar- ity (μm) | Post- Heat Treat ment Densi ty (g/cm $^3$) | Post-H eat Treatm ent Surfac e Irregul arity (μm) | Heat Treat ment- Cause d Shrink age (%) |
| Inve ntive Exa mple 39* | 13.0 | 850 | 30 | 18 | 1000 | 10 | 1.38 | 14.2 | 28.0 | 83.1 | ○ | 6.8 | 10 | 7.56 | 570 | 9.1 |
| Inve ntive Exa mple 40* | 13.0 | 900 | 30 | 18 | 1000 | 10 | 1.34 | 14.2 | 27.6 | 95.1 | ○ | 7.3 | 30 | 7.54 | 250 | 2.8 |

*not according to the invention

In Inventive Examples 39 and 40, the evaluation was performed under the condition that the first maximum achieving temperature during appreciation of the pressing force in the sintering treatment "A" is changed. As is evident from these Inventive Examples, in both cases where the first maximum achieving temperature during appreciation of the pressing force in the sintering treatment "A" is set to 850°C and 900°C, the magnetic properties could be improved by the high-temperature heat treatment "B". Specifically, a difference from a value of the magnetic property "Br [kG] + Hcj [kOe]" in Comparative Example 11 where a sample using the same alloy powder is subjected to sintering without pressure application could be controlled to fall within - 4.5, and the squareness ratio Hk/HcJ could be controlled to become 80% or more.

As is evident from Inventive Example 39, in the case where the first maximum achieving temperature is 850°C, the surface irregularity of the sintered body after the sintering treatment "A" was as extremely small as 10 μm. However, because the density of the sintered body was as low as 6.8 g/cm$^3$, shrinkage further occurred in the sintered body after the high-temperature heat treatment "B". As a result, a volume shrinkage rate of the sintered body due to the high-temperature heat treatment "B" was as extremely large as 9.1 %.

On the other hand, as is evident from Inventive Example 40, in the case where the first maximum achieving temperature is 900°C, the density of the sintered body after the sintering treatment "A" was 7.3 g/cm$^3$, i.e., sintering was almost fully completed. Thus, the volume shrinkage rate of the sintered body due to the high-temperature heat treatment "B" was as small as 2.8 %. Further, as is evident from the aforementioned Inventive Example 37, in the case where the first maximum achieving temperature is 970°C, the density of the sintered body was 7.48 g/cm$^3$. In this case, the volume shrinkage rate of the sintered body due to the high-temperature heat treatment "B" was as extremely small as 1.8 %.

From the above, it was proven that, by setting the first maximum achieving temperature during appreciation of the pressing force in the sintering treatment "A" to 900°C or more, it becomes possible to improve the magnetic properties while controlling the shape of the sintered body to a desired shape (a shape conforming to the pressure sintering die).

FIG. 10 presents a relationship between the second maximum achieving temperature in the high-temperature heat treatment "B" and the holding time at the second maximum achieving temperature in each of Inventive Examples 1 to 40 and Comparative Examples 1 to 11. This figure shows that the magnetic properties can be improved by subjecting a sintered body sintered while applying a pressing force thereto, in the sintering treatment "A", to the high-temperature heat treatment "B" at a temperature of greater than 900°C to 1100°C under a pressure lower than the pressing force during the sintering. Specifically, in regard to the magnet property "Br (kG) + Hcj (kOe)", a difference from a value of the magnet property "Br (kG) + Hcj (kOe)" of a sintered body obtained by sintering without application of the pressing force in the sintering treatment "A", and subjected to the low-temperature heat treatment "C" without performing the high-temperature heat treatment "B" could be controlled to fall to - 4.5 or less, and the squareness ratio Hk/HcJ could be controlled to become 80% or more.

Further, on the assumption that the second maximum achieving temperature in the high-temperature heat treatment "B" is denoted as x (where $1100°C \geq x \geq 900°C$), the magnetic properties could be improved by enabling the holding time y (hour) at a temperature around the second maximum achieving temperature to satisfy the following relationship: $-1.13x + 1173 \geq y \geq -1.2x + 1166$. Specifically, in regard to the magnet property "Br (kG) + Hcj (kOe)", a difference from a value of the magnet property "Br (kG) + Hcj (kOe)" of a sintered body obtained by sintering without application of the pressing force in the sintering treatment "A", and subjected to the low-temperature heat treatment "C" without performing the high-temperature heat treatment "B" could be controlled to fall within - 2, and the squareness ratio Hk/HcJ could be controlled to become 90% or more. In other words, a difference from a sintered body after being subjected to the sintering treatment "A" without application of the pressing force could be reduced.

[Inventive Examples 1 (according to the invention) and 26 (not according to the invention), and Comparative Examples 4, 5, 8 and 10]

In regard to sintered bodies of Inventive Examples 1 and 26 and Comparative Examples 4, 5, 8 and 10, and rare-earth sintered magnets obtained by magnetizing the sintered bodies, properties listed in the following sections (1) to (4) were evaluated in terms of physical properties, in addition to the evaluations presented in Tables 1 to 5.

(1) Shrinkage Rate (%) in Pressing direction

In the pressing direction (see FIGS. 8 and 9), the size of the sintered body sufficiently cooled to room temperature after the sintering step is compared with the size of the processing sheet piece before going through the sintering step, and the rate (%) is defined as shrinkage rate.

(2) Aspect Ratio of Pole Figure

The physical properties of the sintered body 1C can be clarified from a viewpoint of an aspect ratio of a pole

figure representing a variation in orientation, determined by electron backscatter diffraction (EBSD) analysis. Here, a relatively large value of the aspect ratio of the pole figure representing the orientation variation means that the pressure application has been adequately performed. This is because the aspect ratio becomes larger depending on the pressing force during the sintering treatment "A", i.e., during the pressure sintering. The details of the pole figure are as already described with reference to FIG. 4(b), etc.

FIG. 11 depicts one example of the pole figure representing the orientation variation of the sintered body 1C. The aforementioned JSM-7001F manufactured by JEOL Ltd., was used for measurement of the aspect ratio of the pole figure, and the aforementioned software Channel 5 was used for the EBSD analysis. A display format of the pole figure varies depending on a measuring device and an analysis software. Thus, it is preferable to use the above measuring device and analysis software. In order to eliminate errors, it is preferable that the pole figure is converted such that a center thereof as a maximum appearance frequency point is located at an intersection point of the "X0" axis and the "Y0 axis. FIG. 11 depicts a pole figure before the conversion.

(3) Foreign Matter in Triple Point Regions

The physical properties of the sintered body 1C can also be clarified from a viewpoint of foreign matter in triple point regions. As a result of analysis, it became clear that triple point regions comprised in the sintered body IC contains at least Cu or Ga. Thus, the physical properties of the sintered body can be clarified, e.g., by analyzing a rate of an area of Cu, Ga, or Cu and Ga detected in a cross-section of the sintered body 1C. Although the mechanism to provide appearance of Cu and/or Ga in the cross-section is not exactly clear, it can be roughly inferred as follows. Before performing the sintering treatment "A", the foreign matter was uniformly distributed over a rare-earth rich phase. However, due to the pressure application in the sintering treatment "A", the foreign matter is segregated on a surface of the sintered body 1A, and then, through the high-temperature heat treatment "B", the foreign matter is diffused in the rare-earth rich phase.

FIG. 13 depicts one example of an element mapping image obtained by subjecting the cross-section of the sintered body 1C to EPMA (electron probe microanalyzer) analysis and then image analysis. In regard to the obtained element mapping image, an area rate of rare-earth rich phases containing Cu ("31" in FIG. 13), Ga ("32" in FIG. 13), or Cu and Ga, with respect to the entire rare-earth rich phase in the field of view, was calculated. As mentioned above, the magnetic properties, particularly coercivity, of the sintered body produced by the production method according to the present invention are significantly improved, as compared to a sintered body obtained by performing only the sintering treatment "A", i.e., pressure sintering, without performing the high-temperature heat treatment "B" (Comparative Example 4), and a sintered body obtained by performing vacuum sintering, instead of pressure sintering (Comparative Example 5). It can be inferred that, although coercivity is deteriorated due to a small amount of additives such as Cu and/or Ga pushed out onto the surface of the sintered body 1A through the sintering treatment "A", such Cu and/or Ga are diffused over grain boundary regions of a magnet microstructure again through the subsequent high-temperature heat treatment "B" at a temperature of greater than 900°C, to provide improved coercivity.

(4) Area Rate of Large Rare-Earth Rich Phase

As mentioned above, in the cross-section of the sintered body 1C, there are: a rare-earth rich phase containing a rare-earth substance in a higher concentration than that in the remaining region, and a main phase having a composition of an $R_2Fe_{14}B$ (where R is a rare-earth element including yttrium). As a result of diligent experiments, it became clear that a rare-earthy rich phase in triple point regions surrounded by the magnet material particles (main phase) particularly largely grows through the sintering treatment "A". Therefore, the present inventors focused on an area rate (%) of an $\alpha$ $\mu m^2$ or more-wide rare-earth rich phase (rare-earth rich phase having an area of $\alpha$ $\mu m^2$ or more) with respect to the entire rare-earth rich phase, where $\alpha$ $\mu$m is a grain size of the main phase (sintered magnet material particles). The measurement was performed in three fields of view, and an average of area rates therein was used. The measurement field-of view is a field of view as depicted in, e.g., FIG. 12, which has a size of 75 $\mu m \times 75$ $\mu$m, or 35 $\mu m \times 75$ $\mu$m, or is set such that at at least 50 grains fall therewithin. Here, the "grain size" was calculated by executing EBSD analysis software (detector: NordlysNano, manufactured by Oxford Instruments), using the aforementioned JSM-7001F manufactured by JEOL Ltd. Specifically, in a crystal orientation map obtained by the EBSD analysis, a region in which an angular difference between adjacent grains is 2° or more was defined as a grain boundary, and a diameter of an equivalent circle of an area surrounded by the grain boundary was calculated as a grain size of the grain. Further, an average of grain sizes of the grains within the measurement field-of-view was calculated as the "grain size". The above processing was performed by the Channel 5.

In regard to the physical properties listed in the sections (1) to (4), each of the sintered bodies obtained in Inventive Examples 1 and 26 and Comparative Examples 4, 5, 8 and 10 was processed and evaluated as follows.

< Aspect Ratio of Pole Figure >

Each sample was buried in a thermosetting epoxy resin given with an electrically-conductive property, and then the thermosetting epoxy resin was cured at 40°C by taking 8 hours. Subsequently, a cross-section surface of the sample was prepared by a mechanical polishing process, and the EBSD analysis software (detector: NordlysNano, manufactured by Oxford Instruments) was executed to analyze crystal orientation, using JSM-7001F manufactured by JEOL Ltd. As depicted in FIG. 1, an observation area in the cross-section was set at three points consisting of: a first point apart by 1mm from an end surface, or the front end surface 23 along one side, in this example, the D-long side, of the rare-earth sintered magnet 1; a second point at the center of the D-long side; and a third point at an intermediate position between the first and second points. Further, each of the three points was set at a middle position in the depth direction "α" and a middle position in the width direction "γ".

In the EBSD analysis, the range of the field of view was determined such that at least 50 grains fall within a view angle. In the Examples, the view angle was specifically set to 35 μm × 35 μm. In this range, a pole figure representing a variation in orientation of a crystal structure of $Nd_2Fe_{14}B$ was acquired. A half width of the Gauss function and a cluster angle to be used in acquiring the pole figure was set, respectively, to 10° and 5°. Then, processing was performed such that a direction in which the c-axis is most frequently oriented is coincident with a center of the pole figure. Subsequently, level lines created by a default setting of the software Channel 5 were drawn on the obtained pole figure, and the outermost level line (indicative of a point where a density calculated in the pole diagram is twice that of a crystal structure having a random orientation) was subjected to elliptical approximation. Further, based on a long axis and a short axis obtained by the elliptical approximation, an aspect ratio (= the long axis / the short axis) was calculated. The preparation of the pole figure was performed by the software Channel 5. An average of analysis results at the three points was defined as an aspect ratio of the pole figure.

< Foreign Matter in Triple Point Region >

Each sample was buried in a thermosetting epoxy resin given with an electrically-conductive property, and then the thermosetting epoxy resin was cured at 40°C by taking 8 hours. Subsequently, a cross-section surface of the sample was prepared by a mechanical polishing process, and further subjected to flat milling treatment using Ar ions. Then, FE-EPMA measurement was performed, using JSM-7001F manufactured by JEOL Ltd. The FE-EPMA measurement was performed, using JXA-8500F manufactured by JEOL Ltd., under the condition that an acceleration voltage and an irradiation current are set, respectively to 15.0 kV, was set to 200 nA, and at least 50 grains of the main phase fall within an observation area. In Inventive Example 1 and Comparative Examples 4 and 5, an element mapping image was acquired at a direct magnification × 3,000 (range of the field of view: 33 μm × 33 μm). When the grain size is relatively large, an optimal field of view was appropriately selected. As depicted in FIG. 1(b), an observation area in the cross-section was set at three points which equally divide one side (in this example, the D-long side along a long side direction "β") of the rare-earth sintered magnet 1, into four parts. Further, each of the points was set at a middle position in the depth direction "α" and a middle position in the width direction "γ".

In regard to the obtained element mapping image, an area rate (%) of a Cu-containing rare-earth rich phase, with respect to the entire rare-earth rich phase was calculated, using image analysis processing of image analysis processing software (ImageJ), and an average of analysis results at three points was used. In the acquisition of the element mapping image, considering a P/B ratio (a ratio of a peak value of a characteristic X-ray to a background), the largest one of signal intensities of a plurality of elements is set as a maximum value, and a signal intensity of a matrix (main phase) is set as a minimum value.

< Area Rate of Large Rare-Earth Rich Phase >

Each sample was buried in a thermosetting epoxy resin, and then the thermosetting epoxy resin was cured at 40°C by taking 8 hours. Subsequently, a cross-section surface of the sample was prepared by using a mechanical polishing process and an ion polishing process in combination, and FE-SEM observation was performed with respect to the sample after being subjected to electroconductive treatment. The ion polishing process was performed, using SM09010 manufactured by JEOL Ltd., under the condition that an acceleration voltage is set to 6.0 kV or less.

Further, the FE-SEM observation was performed, using SU8020 manufactured by Hitachi, Ltd., under the condition that an acceleration voltage is set to 5.0 kV or less, and a YAG-BSE image was acquired at a direct magnification × 1,000 (range of the field of view: 125 μm × 95 μm). As depicted in FIG. 1(b), an observation area in the cross-section was set at three points which equally divide one side (in this example, the D-long side) of the sintered body 1C, into four parts. Further, each of the points was set at a middle position in the depth direction "α" and a middle position in the width direction "γ". Although the observation area was set at the three points which equally divide the D-long side along the pressing direction "β" into four parts, the same result can be actually obtained even if any one of the four sides is selected

(the same will also be applied to the following).

In regard to the acquired YAG-BSE image, image analysis processing was performed, using image analysis processing software (ImageJ) to analyze a rare-earth rich phase identified through binarization processing. Specifically, assuming that a grain size of the sintered magnet material particles calculated by the EBSD analysis is defined as $\alpha$ $\mu$m, an area rate (%) of an $\alpha$ $\mu m^2$ or more-wide rare-earth rich phase with respect to the entire rare-earth rich phase was calculated. The measurement field-of-view was set such that approximately 50 (but, at least 50) grains fall within the view angle. Subsequently, in regard to the $\alpha$ $\mu m^2$ or more-wide rare-earth rich phases serving as an analysis target, which have been identified in the respective ranges of the field of view in the three observation areas, an average value of them was calculated.

Table 6 presents a result of the above evaluations.

[TABLE 6]

| | Conditions | | | | Evaluation | | | | | | Analysis of Microstructure | | | | |
|---|---|---|---|---|---|---|---|---|---|---|---|---|---|---|---|
| | Paricle Size of Sintered Powder (μm) | Sinterin g Treatme nt "A" | High- Temperature Heat Treatment "B" | | Br (T) | Hcj (kPe) | Br(kG) + Hcj (kOe) | Squareness Ratio Hk/Hcj (%) | Shrinkage Rate in Pressing Direction (%) | Conformability to Pressure Sintering Die | Aspect Ratio of Pole Figure | Foreign Matter in Triple Pint Regions | | | Area Rate of Large Rear-Earth Rich Phase (%) |
| | | With/Without Pressure Application | Maximum Achieving Temperature (°C) | Holding Time of Maximum Achieving Temperature (hour) | | | | | | | | Rate of Area of Phases with Cu detected (%) | Rate of Area of Phases with Ga detected (%) | Rate of Area of Phases with Cu and Ga detected (%) | |
| Inventive Example 1 | 1.0 | With | 970 | 8 | 1.45 | 17.1 | 31.6 | 94.9 | 52 | ○ | 1.3 | 45% | 17% | 13% | 41% |
| Comparative Example 4 | 0.9 | With | Witho ut heat treatm ent | Without heat treatment | 1.42 | 11.9 | 26.1 | 93.5 | 52 | ○ | 1.4 | 15% | 11% | 2% | 30% |
| Comparative Example 5 | 1.0 | Without | Witho ut heat treatm ent | Without heat treatment | 1.43 | 17.3 | 31.6 | 96.8 | 15 | × | 1.1 | 41% | 16% | 14% | 30% |
| Comparative Example 8 | 2.0 | With | Witho ut heat treatm ent | Without heat treatment | 1.33 | 9 | 22.3 | 75.6 | 50 | ○ | 1.6 | 33% | 15% | 11% | 30% |
| Comparative Example 10 | 2.0 | With | 900 | 10 | 1.36 | 9.8 | 23.4 | 79.1 | 50 | ○ | 1.4 | 41% | 18% | 15% | 33% |
| Inventive Example 26* | 2.2 | With | 1000 | 10 | 1.37 | 13.6 | 27.3 | 96.8 | 50 | ○ | 1.4 | 66% | 19% | 17% | 36% |

*not according to the invention

< Evaluation >

In Inventive Example 1, the high-temperature heat treatment "B" was performed at a temperature of greater than 900°C, after the sintering treatment "A", i.e., pressure sintering. On the other hand, in Comparative Example 4, only pressure sintering was performed, and, in Comparative Example 5, the sintering treatment was performed under vacuum (vacuum sintering is performed). In these Inventive and Comparative Examples, the same magnet material powder is used, wherein an average particle size of the magnet material particles is 1 $\mu$m, i.e., less than 2 $\mu$m.

Further, in Inventive Example 26, the high-temperature heat treatment "B" was performed at a temperature of 1000°C for 10 hours, after the sintering treatment "A", i.e., pressure sintering. On the other hand, in Comparative Example 8, the high-temperature heat treatment "B" was not performed, and, in Comparative Example 10, the high-temperature heat treatment "B" was performed at a temperature of 900°C for 10 hours, after the pressure sintering. In these Inventive and Comparative Examples, the same magnet material powder is used, wherein an average particle size of the magnet material particles is 3 $\mu$m, i.e., 2 $\mu$m or more.

With regard to a value of "Br (kG) + Hcj (kOe)", in Comparative Example 4 in which, after the pressure sintering, only the low-temperature heat treatment "C" was performed without performing the high-temperature heat treatment "B", the value remained at 26.1. Similarly, in Comparative Example 6 in which, after the pressure sintering, only the low-temperature heat treatment "C" was performed without performing the high-temperature heat treatment "B", the value remained at 29.0. On the other hand, in Inventive Example 1 in which the heat treatments were performed after the pressure sintering, the value was increased to 31.6, i.e., 27.5 or more, preferably 30.0 or more, as a result of improvements in residual magnetic flux density and coercivity.

With regard to the main phase and foreign matter in the triple point regions surrounded by the main phase, a microstructure becomes unique in regard to Cu and Ga. Comparing Inventive Example 1 with Comparative Examples 4 and 5, the area of triple point regions containing Cu was 45% and 41%, respectively, in Inventive Example 1 providing high magnetic properties and Comparative Example 5 subjected to vacuum sintering. Further, in Inventive Example 1, the area of triple point regions containing Ga was 17%, and the area of triple point regions containing both Cu and Ga was 13%. In Comparative Example 4 subjected to only the pressure sintering, such a microstructure was not observed.

Comparing Inventive Example 26 with Comparative Examples 8 and 10, in Inventive Example 26 in which the high-temperature heat treatment "B" was performed at 1000°C to obtain improved magnetic properties, the area of the Cu-containing triple point regions was 66%, i.e., 40 or more. Further, the area of the Ga-containing triple point regions was 19%, and the area of the Cu and Ga-containing triple point regions was 17%. In Comparative Example 8 subjected to only the pressure sintering, and Comparative Example 10 in which the high-temperature heat treatment "B" was performed at 900°C, such a microstructure was not observed.

From the above, it was proven that there is a tendency that Cu and/or Ga is enriched in a rare-earth rich phase by performing the high-temperature heat treatment "B" at a temperature of greater than 900°C after the pressure sintering, wherein in a microstructure of a resulting sintered body, the area of the Cu-containing triple point regions is 40% or more, and the area of the Ga-containing triple point regions is 15% or more when a grain size of the sintered magnet material particles is less than 2 $\mu$m. and 19% or more when the grain size of the sintered magnet material particles is 2 $\mu$m or more. Further, the area of the Cu and Ga-containing triple point regions is 10% or more when the grain size of the sintered magnet material particles is less than 2 $\mu$m. and 17% or more when the grain size of the sintered magnet material particles is 2 $\mu$m or more. The above microstructure makes it possible to improve the magnetic properties even if the pressure sintering is performed.

With respect to the area rate of the large rare-earth rich phase, it was proven that the rate tends to increase by setting the temperature of the high-temperature heat treatment "B" to greater than 900°C. In Inventive Example 1, an area rate of a rare-earth rich phase having an area of $\alpha$ $\mu m^2$ or more was 41%, and, in Inventive Example 26, the area rate was 36%. As above, in Inventive Examples 1 and 26 in which the high-temperature heat treatment "B" was performed, the area rate of the $\alpha$ $\mu m^2$ or more-wide rare-earth rich phase was 35% or more. On the other hand, in Comparative Examples 4, 5, 8 and 10 in which the high-temperature heat treatment "B" was not performed, the area rate of the $\alpha$ $\mu m^2$ or more-wide rare-earth rich phase was less than 35%.

In Inventive Examples 1 and 26 and Comparative Examples 4, 8 and 10 each subjected to the pressure sintering, the aspect ratio of the pole figure was 1.2 or more. This is provably because a variation in orientation of the sintered body is increased in the pressing direction by the pressing force during the pressure sintering. This makes it possible to suppress anisotropic shrinkage during the sintering and provide a shrinkage rate of about 50% in the pressing direction, thereby obtaining a sintered body with a desired shape.

The present invention can also be applied to a case where the orientation direction of the easy magnetization axes is a so-called non-parallel orientation. Particularly, in the case where each of the easy magnetization axes of the magnet material particles is oriented in one plane, the pressing direction in the sintering step is set to a direction orthogonal to this orientation direction, so that disordering of the orientation is less likely to occur, or seldom occurs. This technique is particularly suitably applied to the non-parallel orientation.

[3. Other Modifications]

For example, as the rare-earth magnet-forming material, a shaped body produced by a heretofore commonly-used powder compacting method may be used. In the case where the rare-earth magnet-forming material is prepared by the powder compacting method, a finely-pulverized magnet material powder is put in a die, and shaped in a state in which crystal axes of the powder are oriented by applying a magnetic field to the powder, as with the aforementioned green sheet forming method. This in-magnetic field shaping may be performed in a magnetic field of about 12 to 20 kOe (960 to 1600 kA/m) and under a pressure of about 0.3 to 3.0 t/$cm^2$ (30 to 300 MPa). As a magnet field application method, a pulsed magnetic field may be used, instead of the aforementioned method. A magnetic field to be applied in this case can be generated, using any type of magnetic circuit based on a desired orientation direction of the magnet material particles. For example, when producing a polar anisotropically oriented magnet, a die in which a plurality of magnetic field coils whose number corresponds to the member of magnetic poles are buried is used, and the magnetic field coils are energized to generate a magnetic field corresponding to the polar anisotropic orientation.

LIST OF REFERENCE SIGNS

1: rare-earth sintered magnet
1A to 1C: sintered body
3: rare-earth magnet-forming material (processing sheet piece, green sheet)
21: upper surface
22: bottom surface
23: front end surface
24: rear end surface

## Claims

1. A method of producing a rare-earth sintered magnet-forming sintered body to be sintered by heating a rare-earth magnet-forming material to a sintering temperature while applying a pressure to the rare-earth magnet-forming material in a sintering die, the rare-earth magnet-forming material comprising magnet material particles each containing a rare-earth substance and having an easy magnetization axis, the rare-earth magnet-forming material being obtained by, before heating and sintering a composite material obtained by mixing the magnet material particles with a thermoplastic resin, releasing, by heat, the thermoplastic resin from the composite material, and the rare-earth sintered magnet-forming sintered body being composed of a sintered body in which the magnet material particles are integrally sintered,
the method comprising:

    charging the rare-earth magnet-forming material comprising the magnet material particles into the sintering die having a cavity with a shape corresponding to that of a rare-earth sintered magnet as a final product;
    heating the rare-earth magnet-forming material to the sintering temperature while applying a given magnitude of pressing force to the rare-earth magnet-forming material charged into the sintering die and thus sintering the rare-earth magnet-forming material, to thereby form the sintered body in which the magnet material particles are integrally sintered, wherein the temperature rise rate before achieving a maximum achieving temperature is 20°C/min or more;
    after sintering the rare-earth magnet-forming material, subjecting the sintered body to high-temperature heat treatment, under a pressure lower than the pressing force during the sintering and under a maximum achieving temperature which ranges from greater than 900°C to 1100°C, and whose difference from the maximum achieving temperature during the sintering under pressure is within 250°C, and
    after the high-temperature heat treatment, subjecting the sintered body to low-temperature heat treatment under a temperature of 350 °C to 650 °C.

2. The method as recited in claim 1, wherein the high-temperature heat treatment is held at a temperature around the maximum achieving temperature set for the high-temperature heat treatment, for about 1 to 50 hours.

3. The method as recited in claim 1 or claim 2, wherein the pressure is initiated to be raised when a temperature during the sintering reaches 300°C at lowest.

4. The method as recited in any one of claims 1 to 3, wherein the pressing force is increased to 3 MPa or more.

5. The method as recited in any one of claims 1 to 4, wherein the maximum achieving temperature during the sintering is greater than 900°C.

6. The method as recited in any one of claims 1 to 5, wherein the high-temperature heat treatment is performed to satisfy the following relationship:

$- 1.13 x + 1173 \geq y \geq - 1.2x + 1166$ (where $1100°C \geq x \geq 900°C$), where x (°C) denotes the maximum achieving temperature in the high-temperature heat treatment, and y (hour) denotes a holding time at a temperature around the maximum achieving temperature in the high-temperature heat treatment.

## Patentansprüche

1. Verfahren zur Herstellung eines gesinterten Seltenerde magnetbildenden gesinterten Körpers, der durch Erhitzen eines Seltenerde magnetbildenden Materials auf eine Sintertemperatur zu sintern ist, während ein Druck in einer Sintermatrize auf das Seltenerde magnetbildende Material angewandt wird, wobei das Seltenerde magnetbildende Material Magnetmaterialpartikel umfasst, die jeweils einen Seltenerdstoff enthalten und eine leichte Magnetisierungsachse aufweisen, wobei das Seltenerde magnetbildende Material, vor Erhitzen und Sintern eines Verbundmaterials, das durch Mischen der Magnetmaterialpartikel mit einem thermoplastischen Harz erhalten wurde, durch Lösen, mittels Hitze, des thermoplastischen Harzes aus dem Verbundmaterial erhalten wurde, und wobei der Seltenerde gesinterte magnetbildende Sinterkörper aus einem Sinterkörper besteht, in welchem die Magnetmaterialpartikel integral gesintert sind, wobei das Verfahren umfasst:

   Laden des Seltenerde magnetbildenden Materials, das die Magnetmaterialpartikel umfasst, in die Sintermatrize, die einen Hohlraum mit einer Form aufweist, welche jener eines gesinterten Seltenerde-Magneten als ein Enderzeugnis entspricht;
   Erhitzen des Seltenerde magnetbildenden Materials auf die Sintertemperatur, während eine gegebene Größenordnung von Presskraft auf das in die Sintermatrize geladene Seltenerde magnetbildende Material angewandt wird, und folglich das Seltenerde magnetbildende Material sintert, um dadurch den Sinterkörper zu bilden, in dem die Magnetmaterialpartikel integral gesintert sind, wobei die Temperaturanstiegsrate vor Erzielen einer maximalen Zieltemperatur 20 °C/min oder mehr beträgt; nach Sintern des Seltenerde magnetbildenden Materials, Unterziehen des Sinterkörpers einer Hochtemperatur-Wärmebehandlung unter einem Druck geringer als die Presskraft während des Sinterns und unter einer maximalen Zieltemperatur, die von größer als 900 °C bis 1100 °C reicht, und deren Differenz von der maximalen Zieltemperatur, während des Sinterns unter Druck innerhalb von 250 °C liegt, und
   nach der Hochtemperatur-Wärmebehandlung, Unterziehen des Sinterkörpers einer Niedertemperatur-Wärmebehandlung unter einer Temperatur von 350 °C bis 650 °C.

2. Verfahren wie in Anspruch 1 dargelegt, wobei die Hochtemperatur-Wärmebehandlung auf einer Temperatur um etwa der maximalen Zieltemperatur gehalten wird, die für die Hochtemperatur-Wärmebehandlung für ca. 1 bis 50 Stunden festgelegt ist.

3. Verfahren wie in Anspruch 1 oder Anspruch 2 dargelegt, wobei der Druck eingeleitet wird, um angehoben zu werden, wenn eine Temperatur während des Sinterns am niedrigsten 300 °C erreicht.

4. Verfahren wie in irgendeinem der Ansprüche 1 bis 3 dargelegt, wobei die Presskraft auf 3 MPa oder mehr erhöht wird.

5. Verfahren wie in irgendeinem der Ansprüche 1 bis 4 dargelegt, wobei die maximale Zieltemperatur während des Sinterns größer als 900 °C ist.

6. Verfahren wie in irgendeinem der Ansprüche 1 bis 5 dargelegt, wobei die Hochtemperatur-Wärmebehandlung die folgende Beziehung erfüllt:

$- 1,13 x + 1173 \geq y \geq - 1,2x + 1166$ (wobei $1100 °C \geq x \geq 900 °C$), wobei x (°C) die maximale Zieltemperatur bei der Hochtemperatur-Wärmebehandlung bezeichnet, und y (Stunde) eine Haltezeit bei einer Temperatur um die maximale Zieltemperatur bei der Hochtemperatur-Wärmebehandlung bezeichnet.

**Revendications**

1. Procédé de fabrication d'un corps fritté pour former un aimant fritté à base de terres rares à fritter en chauffant un matériau de formation d'aimants à base de terres rares jusqu'à une température de frittage tout en appliquant une pression au matériau de formation d'aimants à base de terres rares dans une matrice de frittage, le matériau de formation d'aimants à base de terres rares comprenant des particules de matériau magnétique contenant chacune une substance de terres rares et ayant un axe de magnétisation facile, le matériau de formation d'aimants à base de terres rares étant obtenu, avant de chauffer et de fritter un matériau composite obtenu en mélangeant les particules de matériau magnétique avec une résine thermoplastique, en libérant, par la chaleur, la résine thermoplastique à partir du matériau composite, et le corps fritté de formation d'aimants à base de terres rares étant composé d'un corps fritté dans lequel les particules de matériau magnétique sont intégralement frittées,
le procédé comprenant les étapes consistant à :

    charger le matériau de formation d'aimants à base de terres rares comprenant les particules de matériau d'aimants dans la matrice de frittage ayant une cavité avec une forme correspondant à celle d'un aimant à base de terres rares fritté comme produit final ;
    chauffer le matériau de formation d'aimants à base de terres rares jusqu'à la température de frittage tout en appliquant une amplitude donnée de force de pression au matériau de formation d'aimants à base de terres rares chargé dans la matrice de frittage et fritter ainsi le matériau de formation d'aimants à base de terres rares pour former ainsi le corps fritté dans lequel les particules de matériau magnétique sont intégralement frittées, dans lequel la vitesse d'augmentation de température avant d'atteindre une température maximale de réalisation est de 20 °C/min ou supérieure ; après le frittage du matériau de formation d'aimants à base de terres rares, soumettre le corps fritté à un traitement à haute température, sous une pression inférieure à la force de pression pendant le frittage et sous une température maximale de réalisation allant de plus de 900 °C à 1100 °C et dont la différence par rapport à la température maximale de réalisation pendant le frittage sous pression est de 250 °C près, et
    après le traitement thermique à haute température, soumettre le corps fritté à un traitement thermique à basse température sous une température de 350 °C à 650 °C.

2. Procédé tel que revendiqué dans la revendication 1, dans lequel le traitement à haute température est maintenu à une température située autour de la température maximale de réalisation réglée pour le traitement thermique à haute température, pendant environ 1 à 50 heures.

3. Procédé tel que revendiqué dans la revendication 1 ou la revendication 2, dans lequel la pression commence à être augmentée lorsque la température pendant le frittage atteint 300 °C au niveau le plus bas.

4. Procédé tel que revendiqué dans l'une quelconque des revendications 1 à 3, dans lequel la force de pression est augmentée de 3 MPa ou davantage.

5. Procédé tel que revendiqué dans l'une quelconque des revendications 1 à 4, dans lequel la température maximale de réalisation pendant le frittage est supérieure à 900 °C.

6. Procédé tel que revendiqué dans l'une quelconque des revendications 1 à 5, dans lequel le traitement thermique à haute température est effectué pour satisfaire à la relation suivante :

    - $1,13\ x + 1173 \geq y \geq 1,2x + 1166$ (où 1100 °C $\geq x \geq$ 900 °C) où (°C) représente la température maximale de réalisation dans le traitement thermique à haute température, et y (heure) représente un temps de maintien à une température située autour de la température maximale de réalisation réglée pour le traitement thermique à haute température.

FIG.1A

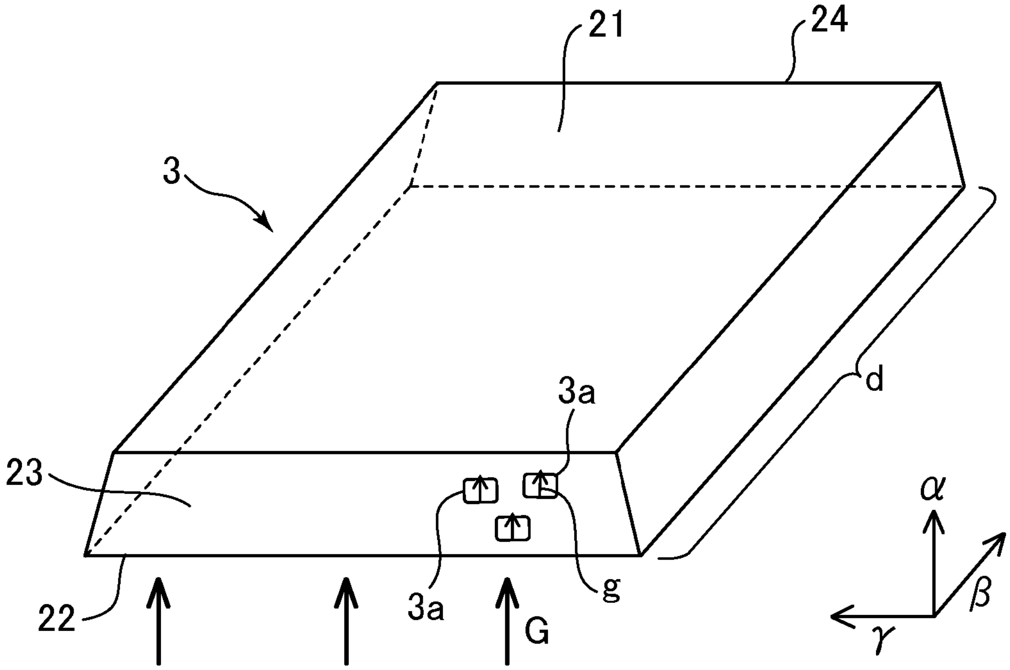


FIG.1B

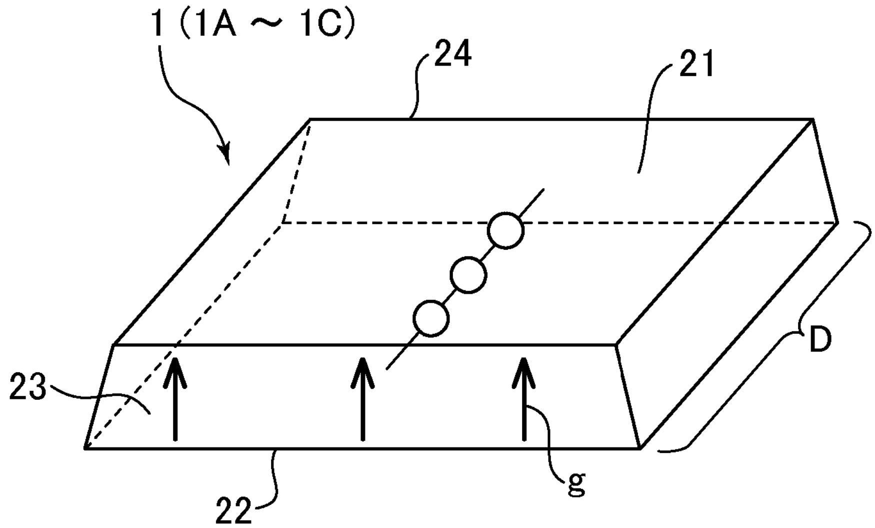

FIG.2A

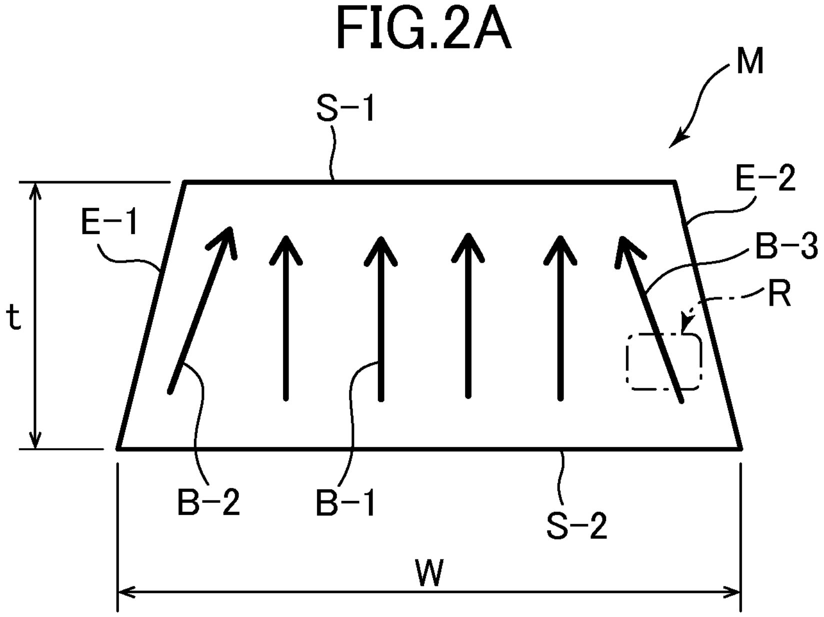


FIG.2B

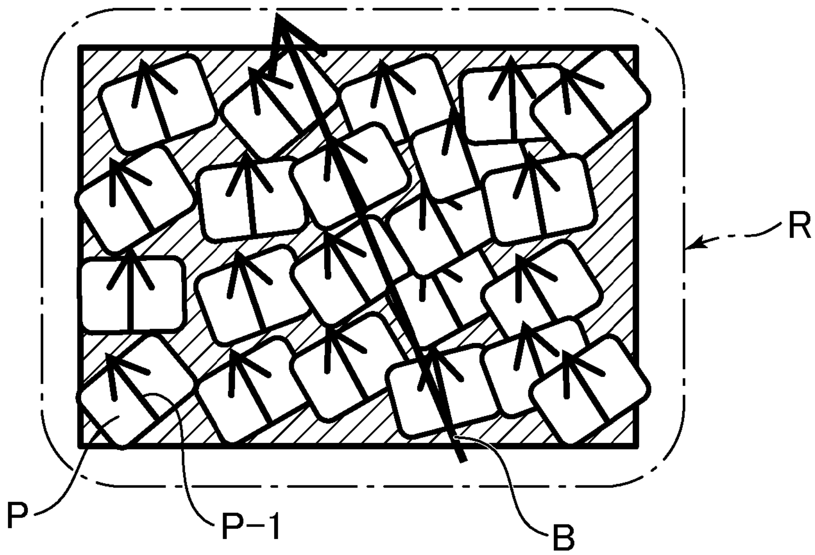

FIG.3

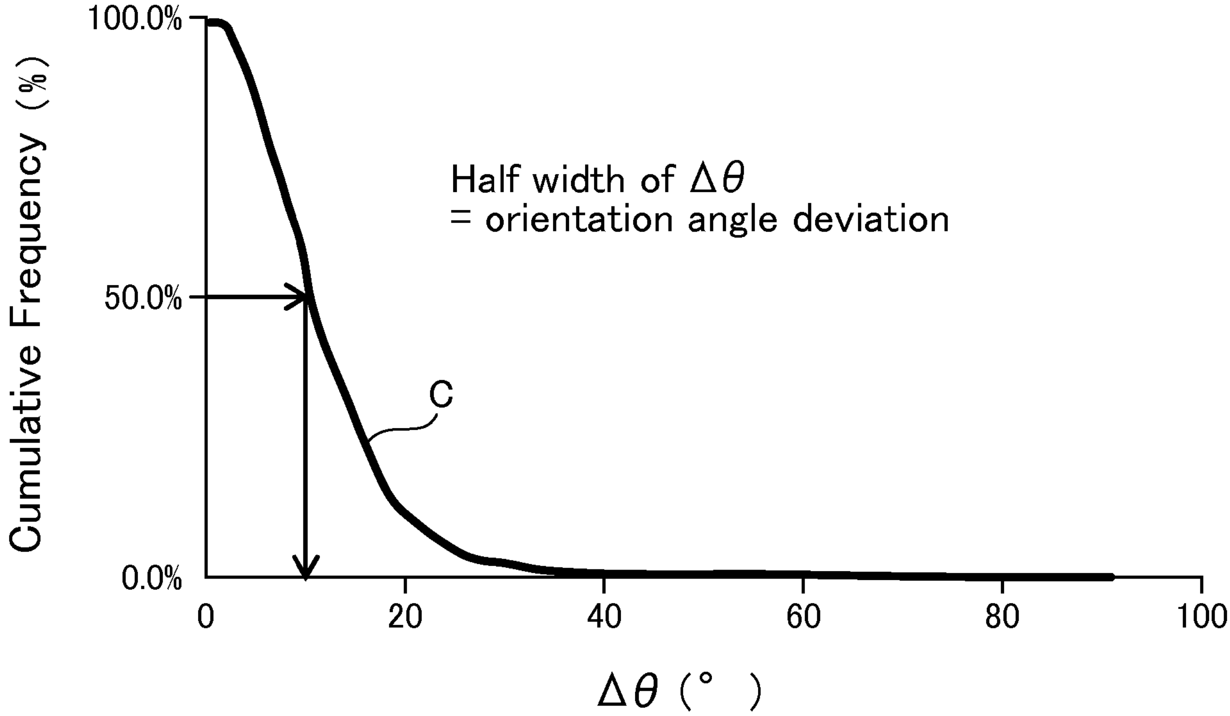
Cumulative Frequency (%)
100.0%
50.0%
0.0%
Half width of Δθ
= orientation angle deviation
C
0
20
40
60
80
100
Δθ (° )

FIG.4A

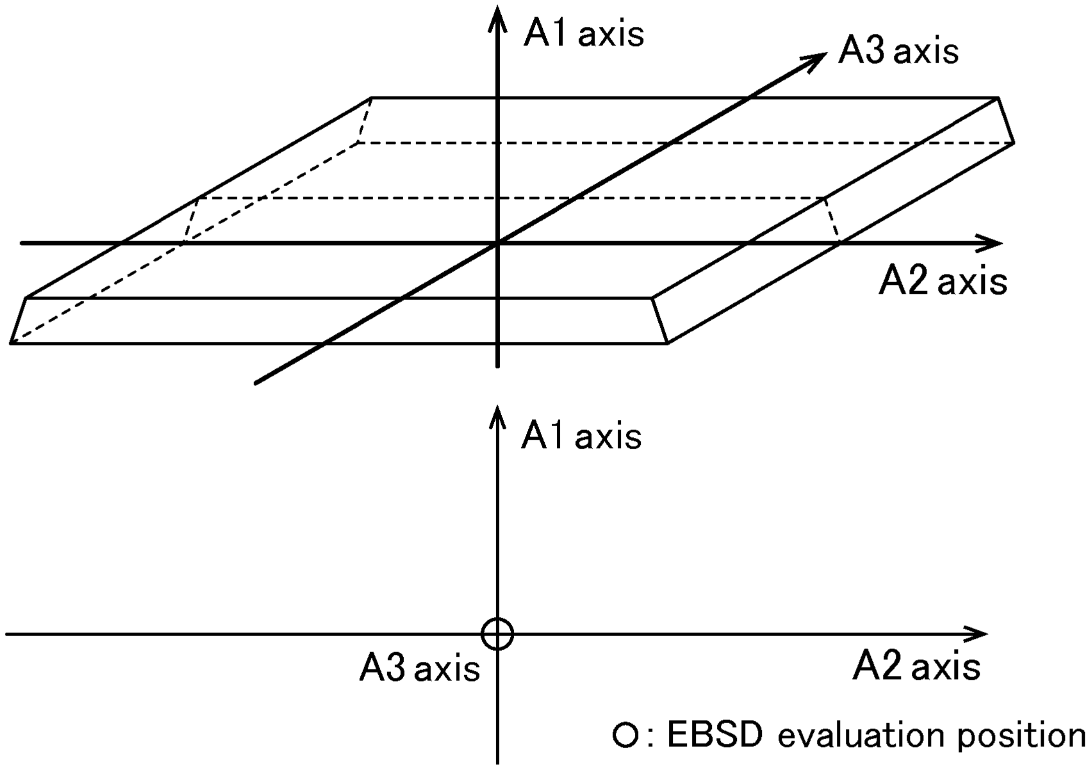


FIG.4B

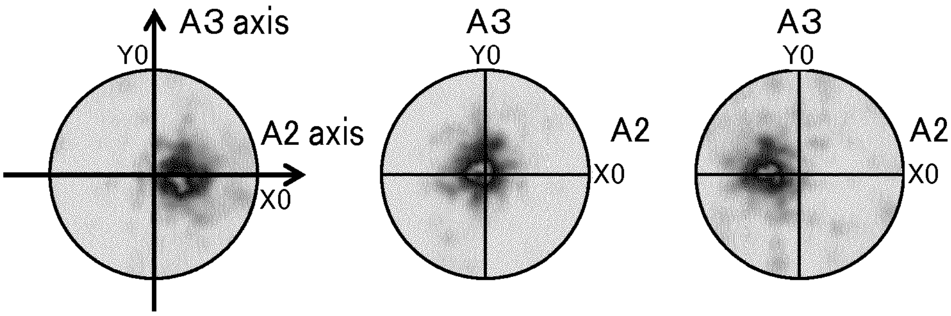


FIG.4C

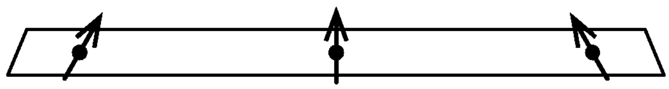

FIG.5A

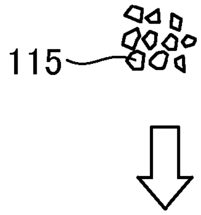


FIG.5B

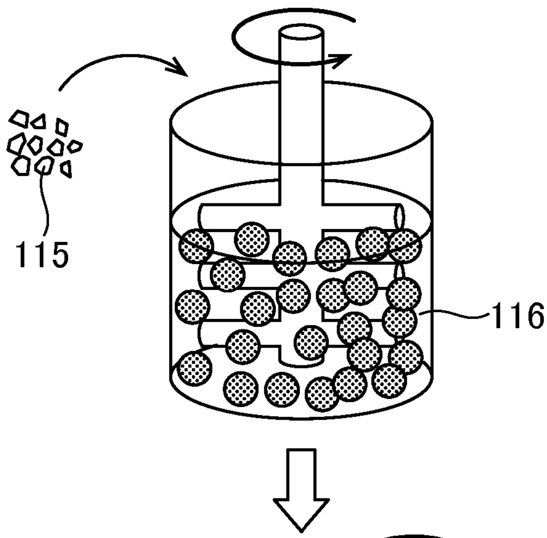


FIG.5C

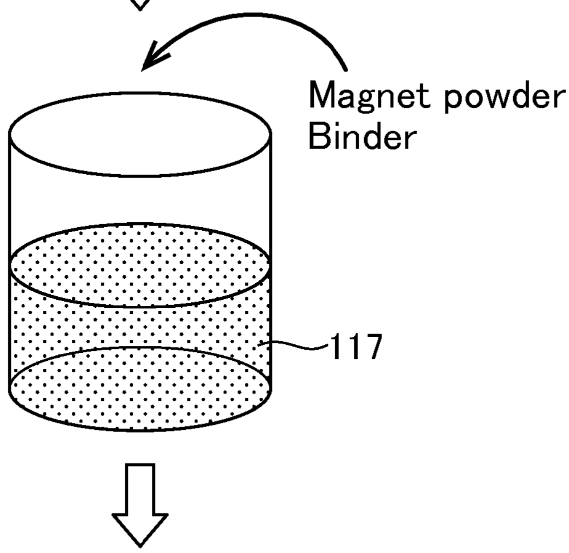


FIG.5D

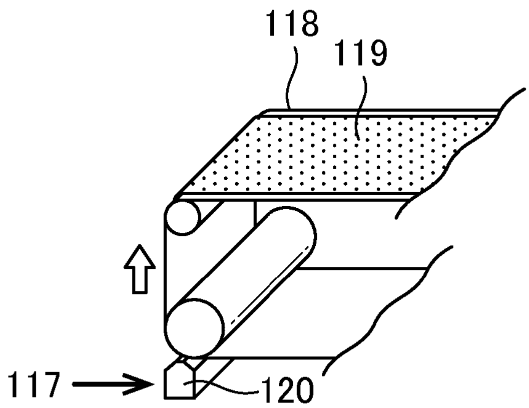

FIG.6

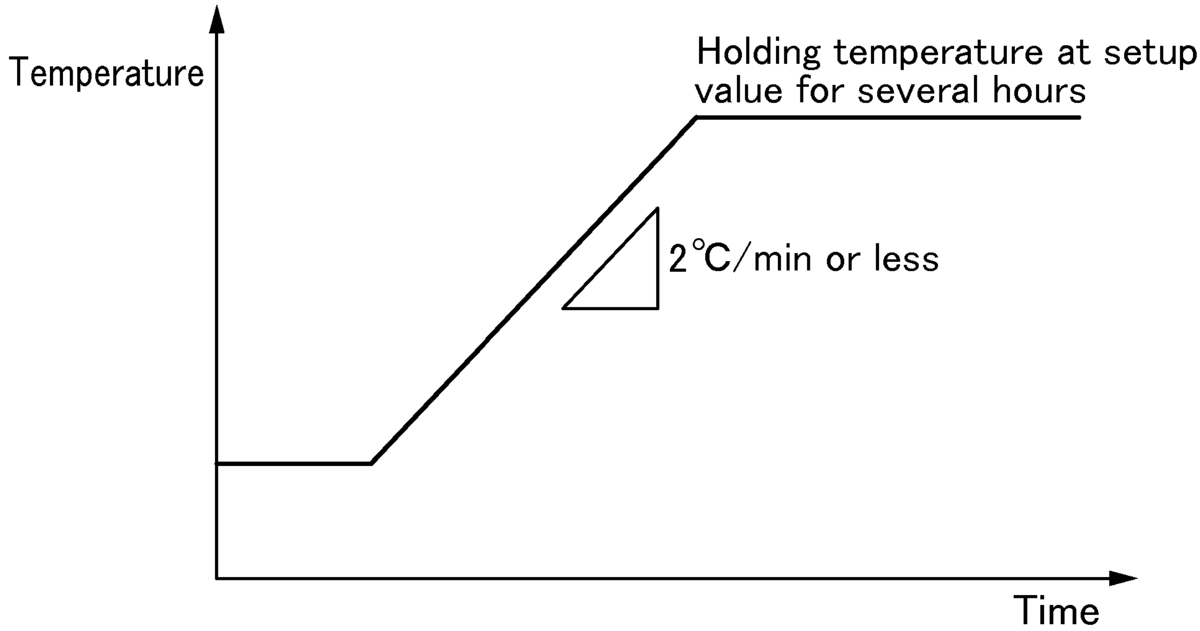
Temperature
Holding temperature at setup value for several hours
2℃/min or less
Time

FIG.7

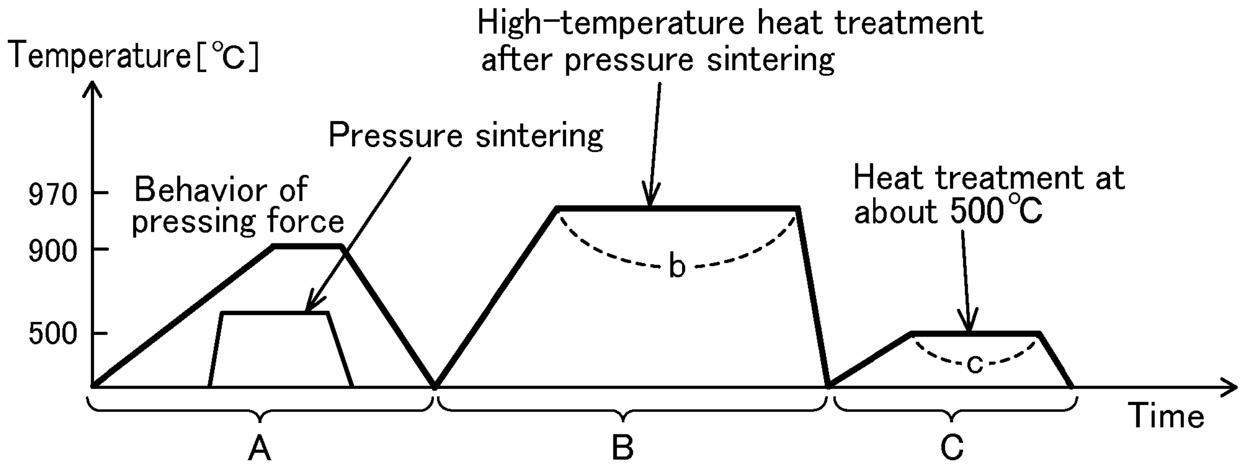
Temperature[℃]
High-temperature heat treatment after pressure sintering
Pressure sintering
970
900
500
Behavior of pressing force
b
Heat treatment at about 500℃
c
Time
A
B
C

FIG.8

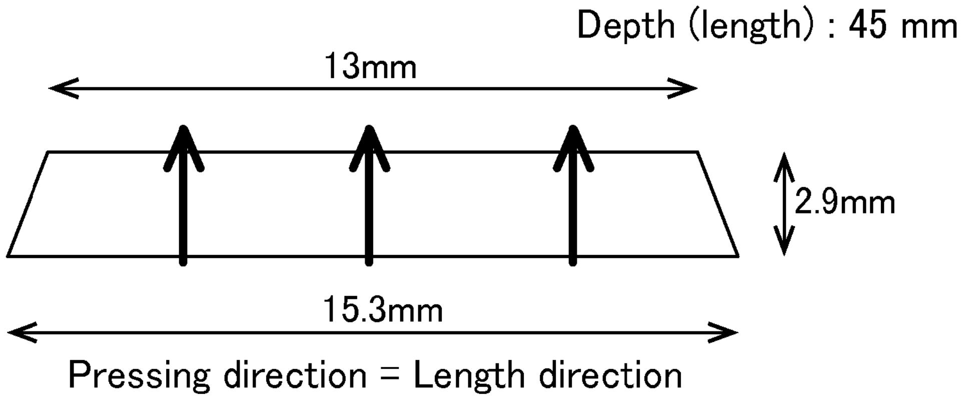
Depth (length) : 45 mm
13mm
2.9mm
15.3mm
Pressing direction = Length direction

FIG.9

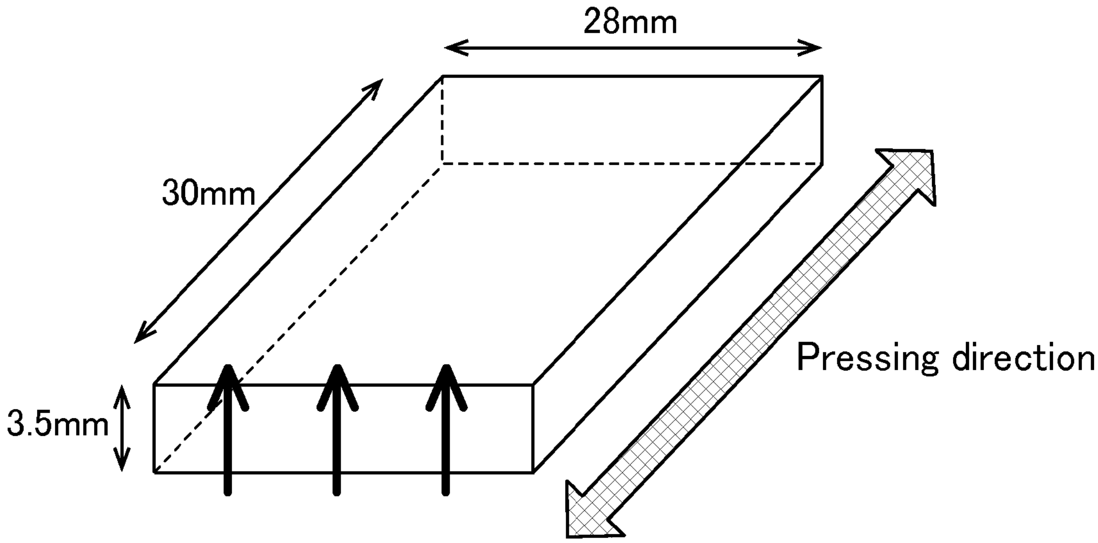
28mm
30mm
Pressing direction
3.5mm

# FIG.10

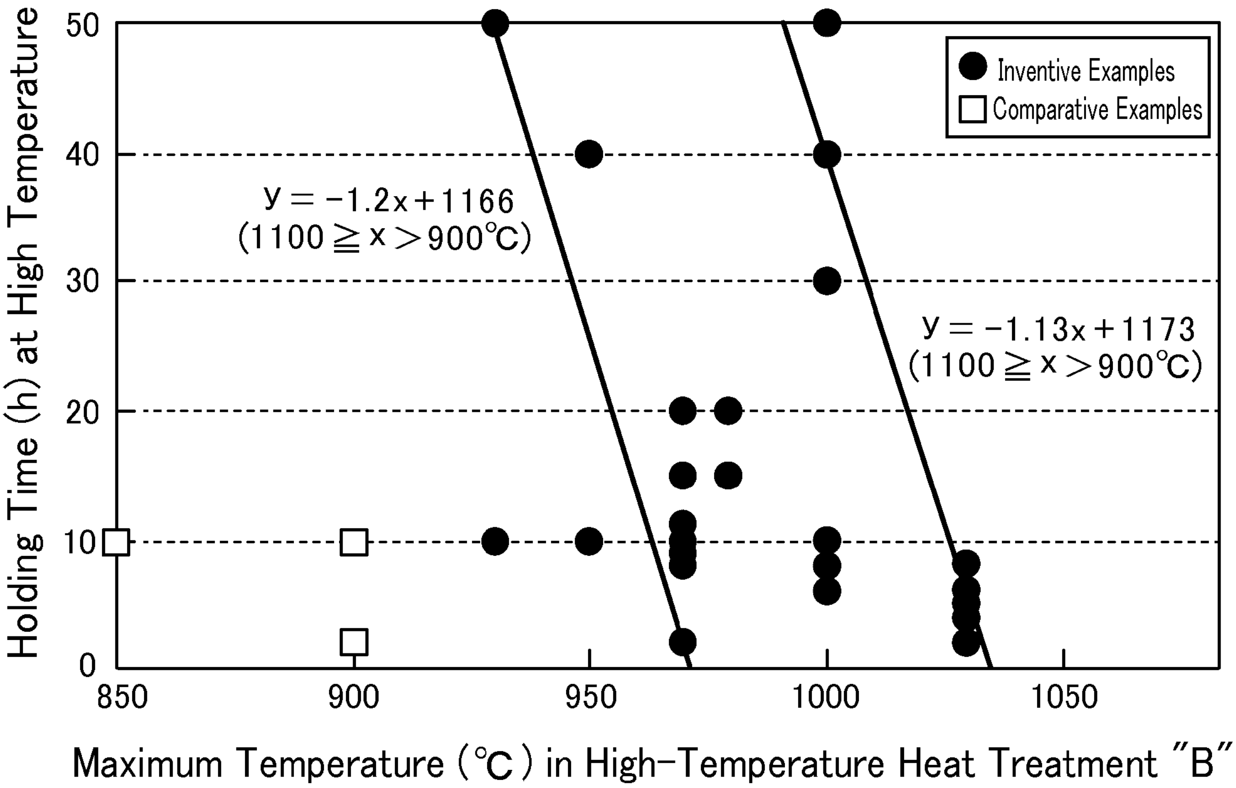
Holding Time (h) at High Temperature
50
40
30
20
10
0
850
900
950
1000
1050
Maximum Temperature (℃) in High-Temperature Heat Treatment "B"
Inventive Examples
Comparative Examples
y = −1.2x + 1166
(1100 ≧ x > 900℃)
y = −1.13x + 1173
(1100 ≧ x > 900℃)

# FIG.11

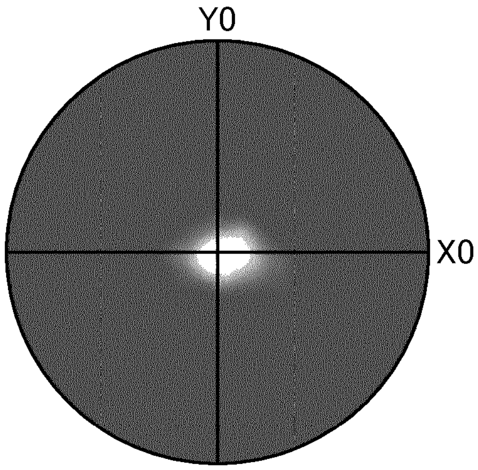
Y0
X0

FIG.12

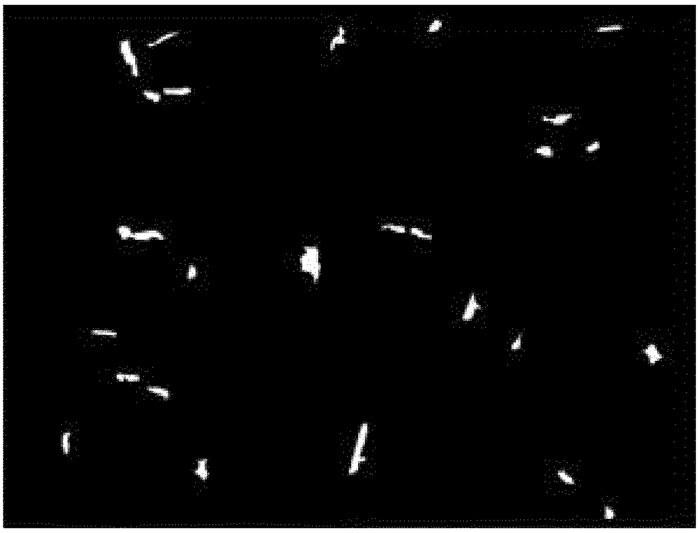

FIG.13

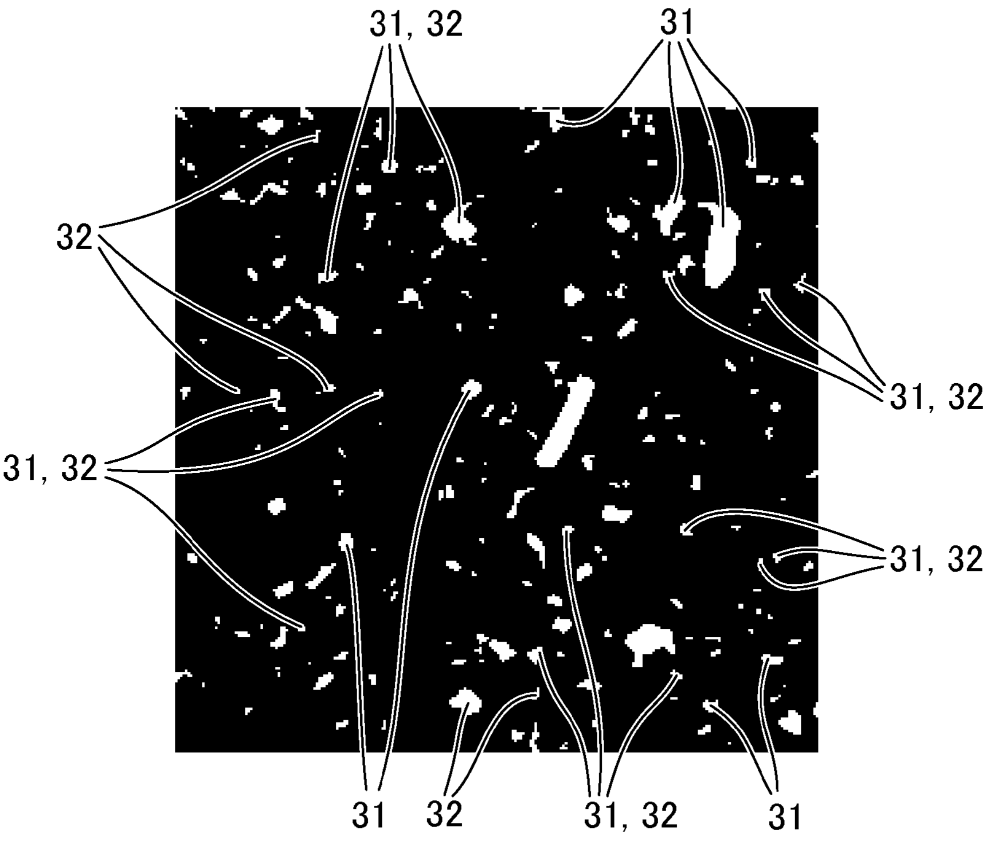

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016042763 A
- JP 2011210879 A
- JP H10163055 A
- JP 2010263172 A
- US 2014145808 A1